# EUROPEAN PATENT SPECIFICATION

(11) **EP 3 545 410 B1**
(45) Date of publication and mention of the grant of the patent: **08.03.2023**
(21) Application number: 17784463.6
(22) Date of filing: 26.09.2017
(51) Int. Cl.: G06F 9/451, H04L 67/50

(54) **APPLICATION PROGRAM INTERFACE FOR MANAGING COMPLICATION DATA**
ANWENDUNGSPROGRAMMSCHNITTSTELLE ZUR VERWALTUNG VON KOMPLIKATIONSDATEN
INTERFACE DE PROGRAMME D'APPLICATION PERMETTANT DE GÉRER DES DONNÉES DE COMPLICATION

(30) Priority: 25.11.2016 US 201662426379 P; 01.02.2017 US 201715421829
(43) Date of publication of application: 02.10.2019
(73) Proprietor: Google LLC, Mountain View, CA 94043 (US)
(72) Inventor: SINGLETON, David, London SW1 W9TQ (GB)
(74) Representative: Anderson, Oliver Ben
(86) International application number: PCT/US2017/053499
(87) International publication number: WO 2018/097890

(56) References cited:
- WO-A1-2014/106168
- US-A1- 2015 149 305
- Anonymous: "Pull technology - Wikipedia, the free encyclopedia", , 7 February 2015 (2015-02-07), XP055284300, Retrieved from the Internet: URL:https://en.wikipedia.org/w/index.php?t itle=Pull_technology&oldid=646050792 [retrieved on 2016-06-28]
- Anonymous: "Push technology - Wikipedia, the free encyclopedia", , 10 March 2015 (2015-03-10), XP055175163, Retrieved from the Internet: URL:http://en.wikipedia.org/wiki/Push_tech nology [retrieved on 2015-03-10]

## Description

This application claims the benefit of U.S. Provisional Application number 62/426,379 filed November 25, 2016.

### BACKGROUND

Certain computing devices, such as computerized watches, have unique challenges associated with efficiently and adequately displaying data to a user of the device. In addition to limiting the amount of information that can be conveyed due to the small screen size of such devices, computerized watches typically have greater power constraints than other mobile devices, such as smartphones, due to the relatively small physical size of computerized watches. While smartphones and similar devices generally maintain a data connection such that the devices may receive data updates when the data is made available by a data provider, if a computerized watch is similarly configured to maintain with similar operational patterns would have a limited battery duration due to the additional power being supplied to a communication unit of the computerized watch.

US2015149305 A1 describes techniques for transmitting and presenting content. In particular, systems and methods are provided for allowing third parties (e.g., "publishers") to specify content items to be transmitted, via channels, to a plurality of devices (e.g., subscriber devices). Content items can include, e.g., product information, promotion details or institution-level notifications and can dynamically change in time. In one instance, a publisher can periodically update content (e.g., images, videos or text) based on, e.g., current or future promotions, new product launches or recent events. One or more content items can then be transmitted via a channel to devices of subscribers of the channel (e.g., simultaneously or asynchronously). When inactivity is detected at a particular subscriber's device, the device can present one or more content items from the channel. In some instances, the channel's content item(s) is sequential to or interleaved with content items from another channel.

### SUMMARY

The invention is defined by the claims.

In general, techniques of this disclosure may enable a computing device to provide multiple updates at different times to a complication displayed on the computing device while only receiving a single package of data from a data provider associated with the particular complication. Throughout this disclosure, a complication may be defined as a dynamic graphical notification element that includes updates received from sources external to the computing device for display on a display device operatively coupled to the computing device.

In one example, the disclosure is directed to a method that includes requesting, by a computing device at a first time and from a data provider associated with a complication, packaged complication data associated with the complication. The complication comprises a graphical notification element on a display device operatively coupled to the computing device. The method further includes receiving, by the computing device and from the data provider, the packaged complication data. The packaged complication data comprises a plurality of complication data updates associated with the complication and timing data. The timing data defines a respective length of time that each complication data update of the plurality of complication data updates is to be displayed on the display device. The method further includes, responsive to receiving the packaged complication data, outputting, by the computing device for display at the display device, a graphical user interface including current time information and the complication. The complication includes a graphical indication of a first complication data update from the plurality of complication data updates included in the packaged complication data. The method further includes determining, by the computing device and based on the first time and the timing data, a second time at which to output a graphical indication of a second complication data update of the plurality of complication data updates for display at the display device. The method further includes replacing, by the computing device at the second time and on the display device, the graphical indication of the first complication data update with the graphical indication of the second complication data update.

In another example, the disclosure is directed to a computing device comprising at least one processor and at least one non-transitory computer-readable storage medium storing instructions that are executable by the at least one processor. The instructions are executable by the at least one processor to request, at a first time and from a data provider associated with a complication, packaged complication data associated with the complication. The complication comprises a graphical notification element on a display device operatively coupled to the computing device. The instructions are further executable by the at least one processor to receive, from the data provider, the packaged complication data. The packaged complication data comprises a plurality of complication data updates associated with the complication and timing data. The timing data defines a respective length of time that each complication data update of the plurality of complication data updates is to be displayed on the display device. The instructions are further executable by the at least one processor to, responsive to receiving the packaged complication data, output, for display at the display device, a graphical user interface including current time information and the complication. The complication includes a graphical indication of a first complication data update from the plurality of complication data updates included in the packaged complication data. The instructions are further executable by the at least one processor to determine, based on the first time and the timing data, a second time at which to output a graphical indication of a second complication data update of the plurality of complication data updates for display at the display device. The instructions are further executable by the at least one processor to replace, at the second time and on the display device, the graphical indication of the first complication data update with the graphical indication of the second complication data update.

In another example, the disclosure is directed to a non-transitory computer-readable storage medium storing instructions that, when executed, cause at least one processor of a computing device to request, at a first time and from a data provider associated with a complication, packaged complication data associated with the complication. The complication comprises a graphical notification element on a display device operatively coupled to the computing device. The instructions, when executed, further cause the at least one processor to receive, from the data provider, the packaged complication data. The packaged complication data comprises a plurality of complication data updates associated with the complication and timing data. The timing data defines a respective length of time that each complication data update of the plurality of complication data updates is to be displayed on the display device. The instructions, when executed, further cause the at least one processor to, responsive to receiving the packaged complication data, output, for display at the display device, a graphical user interface including current time information and the complication. The complication includes a graphical indication of a first complication data update from the plurality of complication data updates included in the packaged complication data. The instructions, when executed, further cause the at least one processor to determine, based on the first time and the timing data, a second time at which to output a graphical indication of a second complication data update of the plurality of complication data updates for display at the display device. The instructions, when executed, further cause the at least one processor to replace, at the second time and on the display device, the graphical indication of the first complication data update with the graphical indication of the second complication data update.

For instance, in the example of the computing device being a computerized watch, the complication may be any application or update service shown in the face of the watch other than the actual timing display (e.g., the hands of the watch or the digital numbers of the watch). The complications may be included in the same graphical user interface of the watch as the timing display information. Each complication may be associated with a single data provider, though a single data provider may be associated with multiple different complications. The data provider may serve as a host for the given complication, communicating update data to the computing device for the complication. The computing device display updates provided by the specific data provider that may be of interest to the user as a complication on the display of the computing device. The computing device may include multiple complications in the same graphical user interface, including complications associated with different data providers.

An example of the general techniques of this disclosure include a computing device requesting packaged complication data from the data provider that includes multiple complication data updates and timing data that defines a length of time that each of the complication data updates should be displayed on the computing device. After receiving the packaged complication data, the computing device may output a graphical indication of a first complication data update from the packaged complication data for display. Using the timing data, the computing device determines a time at which to replace the first complication data update with a different complication data update. At the determined time, without having to request/receive additional data from the data provider, the computing device replaces the first complication data update with a graphical indication of a second complication data update included in the same packaged complication data that was previously received from the data provider.

In this manner, the computing device may iterate through multiple complication data updates according to additionally received timing information without having to download additional complication data from the data provider between each of the complication data updates. Rather than communicating with the data provider each time the computing device attempts to refresh the content included within the complication, the techniques described herein enable the computing device to periodically make a request to the data provider for a package of complication data that will include data for multiple updates to the complication and timing information for the updates.

In some instances, the computing device may display multiple complications, each of which may be associated with a different data provider. In instances where the complications are associated with at least two different data providers, the computing device may coordinate requests to each of the data provides such that the communication unit is still only active for a short time while the requests are sent to the different data providers. In some instances, a central server may coordinate retrieval of information from multiple different data providers, enabling the computing device to send a request to the central server and receive information from the multiple different data providers. In either instance, the computing device may coordinate packaged complication data retrieval from the multiple data providers to reduce the number of communication sessions needed and the duration a communication unit of the computing device is active as compared to retrieving or otherwise receiving data each time the computing devices updates each complication.

By reducing the number of communications made to the data provider, a computing device that executes the techniques described herein may consume less electrical power, thereby extending the battery life of the computing device. In some further examples, the computing device may also deactivate a communication unit between requests to the data provider. By only providing power to the communication unit during the periodic requests to the data provider, a computing device that executes the techniques described herein may compound the battery-saving benefits described above.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example computing device configured to output complication data updates received in packaged complication data, in accordance with one or more aspects of the present disclosure.
FIG. 2 is a block diagram illustrating an example computing device configured to output complication data updates received in packaged complication data, in accordance with one or more aspects of the present disclosure.
FIG. 3 is a block diagram illustrating an example system that includes a computing device that outputs screen content for display at a remote device, in accordance with one or more techniques of the present disclosure.
FIG. 4 is a timing diagram illustrating timing characteristics of an example computing device configured to output complication data updates received in packaged complication data, in accordance with one or more aspects of the present disclosure.
FIG. 5 is a flowchart illustrating further example operations of an example computing device configured to output complication data updates received in packaged complication data, in accordance with one or more aspects of the present disclosure.

### DETAILED DESCRIPTION

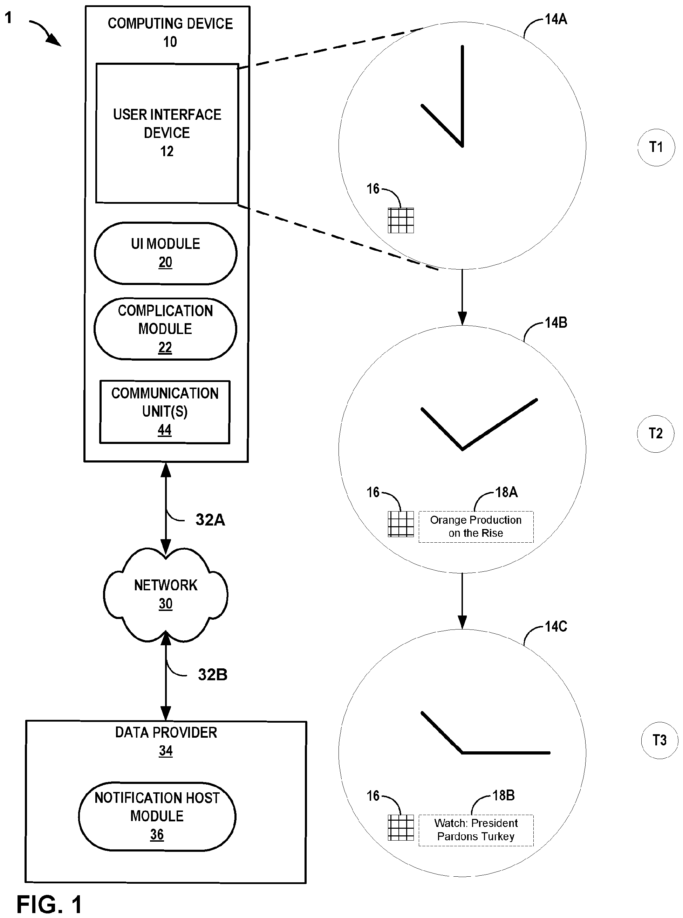

FIG. 1 is a conceptual diagram illustrating an example computing system 1 configured to output complication data updates received in packaged complication data, in accordance with one or more aspects of the present disclosure. Computing system 1 of FIG. 1 is an example computing system that includes computing device 10, data provider 34, and network 30.

Network 30 represents any public or private communication network, for instance, a cellular, Wi-Fi, and/or other type of network for transmitting data between computing devices. Computing device 10 and data provider 34 may send and receive data across network 30 using any suitable communication techniques. For example, computing device 10 may be operatively coupled to network 30 using network link 32A. Data provider 34 may be operatively coupled to network 30 by network link 32B. Network 30 may include network hubs, network switches, network routers, etc., that are operatively inter-coupled thereby providing for the exchange of information between computing device 10 and data provider 34. In some examples, network links 32A and 32B may be Ethernet, ATM or other network connections. Such connections may be wireless and/or wired connections.

Data provider 34 represents any suitable remote computing system, such as one or more desktop computers, laptop computers, mobile phones, tablet computers, mainframes, servers, cloud computing systems, etc. capable of sending and receiving information across network link 32B to network 30. In some examples, data provider 34 represents a host server for a complication data update system service. One or more computing devices, such as computing device 10, may access a complication data update service hosted by data provider 34 for transmitting and/or receiving complication data update data between platforms, applications, and services executing at computing device 10. In some examples, data provider 34 represents a cloud computing system that provides notification services through network 30 to one or more computing devices, such as computing device 10, that access the complication data update services via access to the cloud provided by data provider 34. For example, data provider 34 may be host of a news application and computing device 10 may be a computerized watch device. The host (i.e., data provider 34) may determine complication data updates pertinent to computing device 10. Upon receiving a request to provide the pertinent complication data updates to computing device 10, data provider 34 may forward a package of the complication data and timing data to the computerized watch device (i.e., computing device 10) via network 30, where the timing data defines a length of time that each of the complication data updates should be displayed on the computerized watch device.

In the example of FIG. 1, data provider 34 includes notification host module 36. Notification host module 36 may perform operations described using software, hardware, firmware, or a mixture of hardware, software, and firmware residing in and/or executing at data provider 34. Data provider 34 may execute notification host module 36 with multiple processors or multiple devices. Data provider 34 may execute notification host module 36 as a virtual machine executing on underlying hardware. Notification host module 36 may execute as a service of an operating system or computing platform. Notification host module 36 may execute as one or more executable programs at an application layer of a computing platform.

Notification host module 36 may perform functions for routing complication data update data between one or more computing devices, such as computing device 10, over network 30. For example, notification host module 36 may perform functions for hosting a complication data update service and outputting complication data update data associated with platforms, applications, and/or services executing at computing device 10. For example, notification host module 36 may receive complication data update data indicative of a newsworthy event pertinent to computing device 10 and send the complication data update data across network 30 to computing device 10. Computing device 10 may receive the complication data update data from notification host module 36 of data provider 34 via network link 32B and provide an alert at computing device 10 to indicate the receipt of the complication data update data.

In the example of FIG. 1, computing device 10 is a mobile computing device (e.g., a computerized watch device). However, in other examples, computing device 10 may be a tablet computer, a personal digital assistant (PDA), a laptop computer, a gaming system, a media player, an e-book reader, a television platform, an automobile navigation system, a wearable computing device (e.g., computerized eyewear, a computerized glove), a mobile telephone, or any other type of mobile or non-mobile computing device.

As shown in FIG. 1, computing device 10 includes a user interface device (UID) 12. UID 12 of computing device 10 may function as an input device for computing device 10 and as an output device. UID 12 may be implemented using various technologies. For instance, UID 12 may function as an input device using a presence-sensitive input screen, such as a resistive touchscreen, a surface acoustic wave touchscreen, a capacitive touchscreen, a projective capacitance touchscreen, a pressure sensitive screen, an acoustic pulse recognition touchscreen, or another presence-sensitive display technology. UID 12 may function as an output (e.g., display) device using any one or more display devices, such as a liquid crystal display (LCD), dot matrix display, light emitting diode (LED) display, organic light-emitting diode (OLED) display, e-ink, or similar monochrome or color display capable of outputting visible information to a user of computing device 10.

UID 12 of computing device 10 may include a presence-sensitive display that may receive tactile input from a user of computing device 10. UID 12 may receive indications of the tactile input by detecting one or more gestures from a user of computing device 10 (e.g., the user touching or pointing to one or more locations of UID 12 with a finger or a stylus pen). UID 12 may present output to a user, for instance at a presence-sensitive display. UID 12 may present the output as a graphical user interface (e.g., user interfaces 14A-14C), which may be associated with functionality provided by computing device 10. For example, UID 12 may present various user interfaces of components of a computing platform, operating system, applications, or services executing at or accessible by computing device 10 (e.g., an electronic message application, an Internet browser application, a mobile operating system, etc.). A user may interact with a respective user interface to cause computing device 10 to perform operations relating to a function.

Computing device 10 may include one or more communication units 44. One or more communication units 44 of computing device 10 may communicate with external devices via one or more wired and/or wireless networks by transmitting and/or receiving network signals on the one or more networks. Examples of communication unit 44 include a network interface card (e.g. such as an Ethernet card), an optical transceiver, a radio frequency transceiver, a GPS receiver, or any other type of device that can send and/or receive information. Other examples of communication units 44 may include short wave radios, cellular data radios, wireless network radios, as well as universal serial bus (USB) controllers.

Computing device 10 may include user interface ("UI") module 20, and complication module 22. Modules 20 and 22 may perform operations described using software, hardware, firmware, or a mixture of hardware, software, and firmware residing in and/or executing at computing device 10. Computing device 10 may execute modules 20 and 22 with one or more processors. Computing device 10 may execute modules 20 and 22 as a virtual machine executing on underlying hardware. Modules 20 and 22 may execute as a service or component of an operating system or computing platform. Modules 20 and 22 may execute as one or more executable programs at an application layer of a computing platform. UID 12 and modules 20 and 22 may be otherwise arranged remotely to and remotely accessible to computing device 10, for instance, as one or more network services operating at network 30 in a network cloud.

In the example of FIG. 1, computing device 10 may be a computerized watch device. In accordance with the techniques of this disclosure, UI module 20 of computing device 10 may output, for display at UID 12, user interface 14A at time T1. As such, user interface 14A includes an indication of a current time. UI module 20 may also output complication 16. Complication 16 is a graphical notification element associated with data provider 24 that enables computing device 10 to display updates provided by data provider 34 that may be of interest to the user. In the example of FIG. 1, complication 16 may be associated with a news application that provides news stories hosted by data provider 34.

Computing device 10 may request, from data provider 34 associated with complication 16, packaged complication data associated with or being representative for complication 16. For instance, at some time between T1 and T2, complication module 22 of computing device 10 may request for data provider 34 to provide new news stories that may be of interest to the user.

Complication module 22 may perform functions associated with receiving, managing, and otherwise handling at least a portion of the complication data generated and/or received by platforms, applications, and services executing at computing device 10. Complication module 22 may cause UI module 20 to output a graphical indication of a complication data update to indicate the receipt or iteration of the complication data update data by computing device 10. Complication module 22 may receive packaged complication data from data provider 34 and output the received complication data updates in the packaged complication data to a recipient platform, application, and/or service executing at computing device 10.

As used throughout the disclosure, the term "complication data" is used to describe various types of information that may indicate the occurrence of an event associated with various platforms, applications, and services executing within an execution environment at one or more computing devices, such as computing device 10. For example, complication data may include, but is not limited to, information specifying an event such as information generated and/or received by a third-party application executing at computing device 10. For instance, complication data may be related to weather information, calendar events, activity information, social media information, news information, sporting event information, video game updates, concert information, or any other updates associated with applications that computing device 10 may execute.

Complication module 22 may handle complication data as computing device 10 receives the complication data from data provider 34. For instance, computing device 10 may include a complication queue for processing packaged complication data that includes multiple complication data updates. Complication module 22 may place the received complication data into the complication queue. UI module 20, which may also have access to the complication queue, may output complication data updates as instructed by complication module 22 in accordance with timing data received from data provider 34.

Complication module 22 of computing device 10 may receive, from data provider 34, the packaged complication data. The packaged complication data may include a plurality of complication data updates associated with complication 16 and timing data that defines a respective length of time that each complication data update of the plurality of complication data updates is to be displayed on UID 12. For instance, data provider 34 may accumulate two or more news stories to send to computing device 10. Complication module 22 may receive the news stories and timing data for the news stories from data provider 34 via network 30.

Responsive to receiving the packaged complication data, UI module 20 of computing device 10 may output, at a first time and for display in user interface 14B at UID 12, graphical user interface 14B that includes current time information and graphical indication 18A of a first complication data update of the plurality of complication data updates. In the example of FIG. 1, the first news story of the multiple news stories included in the packaged complication data may be titled "Orange Production on the Rise." At time T2, UI module 20 may output graphical indication 18A that shows the title of the first news story in the first complication data update. In some examples, if UID 12 were to receive an indication of user input selecting graphical indication 18A, UI module 20 may output the associated news story on UID 12 of computing device 10.

Complication module 22 may determine, based on the first time and the timing data, a second time at which to output graphical indication 18B of a second complication data update of the plurality of complication data updates for display at UID 12. For instance, the timing data received in the packaged complication data update may indicate that graphical indication 18A should only be displayed at UID 12 for a period of five minutes. As such, complication module 22 may determine that at time T3, which equals time T2 plus five minutes, UI module 20 should remove graphical indication 18A from UID 12 and display graphical indication 18B in its place.

UI module 20 may replace, at the second time and on UID 12, graphical indication 18A of the first complication data update with graphical indication 18B of the second complication data update. As described above, complication module 22 determines that graphical indication 18B should be output at time T3, which equals time T2 plus the five minutes defined in the timing data. As such, at time T3, UI module 20 may remove graphical indication 18A for the first complication data update and instead display graphical indication 18B for the second complication data update in user interface 14C. In the example of FIG. 1, the second complication data update is associated with a video news story of the President of the United States of America pardoning a turkey, which is an American Thanksgiving Day custom. In some examples, if UID 12 were to receive an indication of user input selecting graphical indication 18B, UI module 20 may begin to output the video associated with graphical indication 18B on UID 12 of computing device 10.

In this manner, computing device 10 may iterate through numerous complication data updates from data provider 34 without having communication unit 44 contact data provider 34 in between displaying each of the complication data updates. Rather than communicating with the data provider each time computing device 10 attempts to renew the complication, the techniques described herein enable computing device 10 to periodically make a request to data provider 34 for multiple updates to complication 16. Computing device 10 may then iterate through the multiple updates according to the timing data. By reducing the number of communications made to data provider 34, computing device 10 may consume less electrical power, thereby extending the battery life of computing device 10. In some further examples, complication module 22 may also deactivate communication unit 44 between requests to data provider 34. By only providing power to communication unit 44 during the periodic requests to data provider 34, computing device 10 may compound the battery-saving benefits described above.

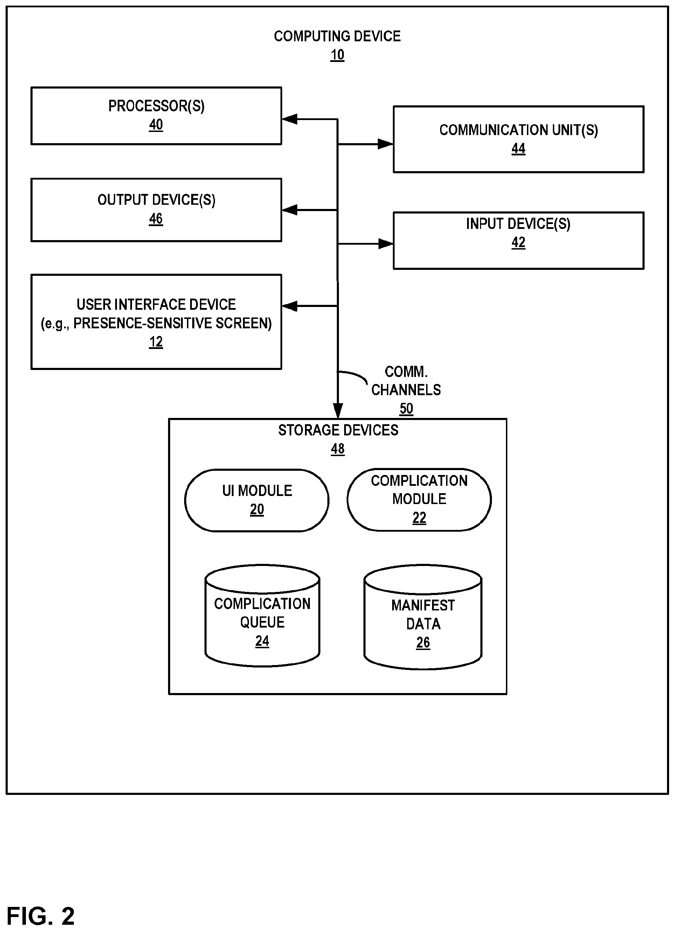

FIG. 2 is a block diagram illustrating an example computing device 10 configured to output complication data updates received in packaged complication data, in accordance with one or more aspects of the present disclosure. Computing device 10 of FIG. 2 is described below within the context of system 1 of FIG. 1. FIG. 2 illustrates only one particular example of computing device 10 and many other examples of computing device 10 may be used in other instances. In the example of FIG. 2, computing device 10 may be a wearable computing device, such as a computerized watch device. However, in other examples, computing device 10 may be a mobile computing device, or a non-portable (e.g., desktop, etc.) computing device. Computing device 10 of FIG. 2 may include a subset of the components included in example computing device 10 or may include additional components not shown in FIG. 2.

As shown in the example of FIG. 2, computing device 10 includes user interface device 12 ("UID 12"), one or more processors 40, one or more input devices 42, one or more communication units 44, one or more output devices 46, and one or more storage devices 48. Storage devices 48 of computing device 10 also include UI module 20, complication module 22, complication queue 24, and manifest data 26. UI module 20 and complication module 22 may rely on information stored as complication queue 24 and manifest data 26 at storage device 48. In other words, as is described in more detail below, complication module 22 may be operable by processors 40 to perform read/write operations on information, stored as complication queue 24, at storage device 48. UI module 20 may then access the information stored in complication queue 24 and manifest data 26 to perform a function of computing device 10.

Communication channels 50 may interconnect each of the components 12, 20, 22, 24, 26, 40, 42, 44, 46, and 48 for inter-component communications (physically, communicatively, and/or operatively). In some examples, communication channels 50 may include a system bus, a network connection, an inter-process communication data structure, or any other method for communicating data.

One or more input devices 42 of computing device 10 may receive input. Examples of input are tactile, audio, and video input. Input devices 42 of computing device 10, in one example, includes a presence-sensitive display, touch-sensitive screen, mouse, keyboard, voice responsive system, video camera, microphone or any other type of device for detecting input from a human or machine.

One or more output devices 46 of computing device 10 may generate output. Examples of output are tactile, audio, and video output. Output devices 46 of computing device 10, in one example, includes a presence-sensitive display, sound card, video graphics adapter card, speaker, cathode ray tube (CRT) monitor, liquid crystal display (LCD), or any other type of device for generating output to a human or machine.

One or more communication units 44 of computing device 10 may communicate with external devices via one or more wired and/or wireless networks by transmitting and/or receiving network signals on the one or more networks. Examples of communication unit 44 include a network interface card (e.g. such as an Ethernet card), an optical transceiver, a radio frequency transceiver, a GPS receiver, or any other type of device that can send and/or receive information. Other examples of communication units 44 may include short wave radios, cellular data radios, wireless network radios, as well as universal serial bus (USB) controllers.

In some examples, UID 12 of computing device 10 may include functionality of input devices 42 and/or output devices 46. In the example of FIG. 2, UID 12 may be or may include a presence-sensitive input device. In some examples, a presence sensitive input device may detect an object at and/or near a screen. As one example range, a presence-sensitive input device may detect an object, such as a finger or stylus that is within 2 inches or less of the screen. The presence-sensitive input device may determine a location (e.g., an (x,y) coordinate) of a screen at which the object was detected. In another example range, a presence-sensitive input device may detect an object six inches or less from the screen and other ranges are also possible. The presence-sensitive input device may determine the location of the screen selected by a user's finger using capacitive, inductive, and/or optical recognition techniques. In some examples, presence sensitive input device also provides output to a user using tactile, audio, or video stimuli as described with respect to output device 46, e.g., at a display. In the example of FIG. 2, UID 12 presents a user interface (such as user interface 14A or 14B of FIG. 1).

While illustrated as an internal component of computing device 10, UID 12 also represents and external component that shares a data path with computing device 10 for transmitting and/or receiving input and output. For instance, in one example, UID 12 represents a built-in component of computing device 10 located within and physically connected to the external packaging of computing device 10 (e.g., a screen on a mobile phone). In another example, UID 12 represents an external component of computing device 10 located outside and physically separated from the packaging of computing device 10 (e.g., a monitor, a projector, etc. that shares a wired and/or wireless data path with a tablet computer).

One or more storage devices 48 within computing device 10 may store information for processing during operation. Computing device 10 may store data (e.g., complication queue 24 and manifest data 26) that modules 20 and 22 access during execution at computing device 10). In some examples, storage device 48 is a temporary memory, meaning that a primary purpose of storage device 48 is not long-term storage. Storage devices 48 on computing device 10 may configured for short-term storage of information as volatile memory and therefore not retain stored contents if powered off. Examples of volatile memories include random access memories (RAM), dynamic random access memories (DRAM), static random access memories (SRAM), and other forms of volatile memories known in the art.

Storage devices 48, in some examples, also include one or more computer-readable storage media. Storage devices 48 may be configured to store larger amounts of information than volatile memory. Storage devices 48 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage devices 48 may store program instructions and/or information (e.g., data) associated with modules 20 and 22, complication queue 24, and manifest data 26.

One or more processors 40 may implement functionality and/or execute instructions within computing device 10. For example, processors 40 on computing device 10 may receive and execute instructions stored by storage devices 48 that execute the functionality of UI module 20 and notification client module 22. These instructions executed by processors 40 may cause computing device 10 to determine whether to output alerts and at what intensity to output alerts based on notification data at notification queue 24 and rules 26, within storage devices 48 during program execution. Processors 40 may execute instructions of modules 20 and 22 to cause UID 12 to output alerts based on notification data for display at UID 12 as content of user interface 14A or 14B. That is, modules 20 and 22 may be operable by processors 40 to perform various actions or functions of computing device 10, for instance, causing UID 12 to present user interfaces, such as user interfaces 14A-14C of FIG. 1, at UID 12.

Complication queue 24 represents any suitable storage medium for storing and buffering notification data. For instance, complication queue 24 may be a queue, stack, or other data structure for organizing complication data update data received (e.g., from data provider 34 of FIG. 1) by notification module 22 over time. UI module 20 may access complication queue 24 and initiate output of a complication data update based on the complication data stored at complication queue 24. Complication module 22 may perform read/write operations for adding information to complication queue 24 (e.g., when notification data is received) or removing information from complication queue 24 (e.g., when UI module 20 outputs an alert associated with the notification data or actively determines to refrain from outputting the alert).

Manifest data store 26 represents any suitable storage medium for storing and buffering rules and reference characteristics that UI module 20 and complication module 22 may access when determining what information to send to a data provider, when to request data from the data provider, and when to cycle through the received complication data updates. For instance, manifest data store 26 may include a set of one or more reference characteristics that reflect various requirements provided by the data provider, including a minimum update frequency, information needed by the data provider in order to supply accurate and useful complication data updates (e.g., device location information, user preference information, device operating information, etc.), and updated timing data received from the data provider along with the packaged complication data that defines a length of time that each complication data update of the plurality of complication data updates should be displayed on UID 12.

One or more central server devices may accumulate information regarding a plurality of complications. The one or more central server devices may be implemented as a single central server device, a group of multiple central server devices working together, or a cloud computing system, among other things. For instance, the one or more central server devices may receive information from a data provider indicating that the data provider is providing a complication to one or more computing devices, such as computing device 10. The information, also known as manifest data, may include a minimum update frequency for the complication (e.g., an indication of how often the computing device should refresh the complication data updates), personal preference information (e.g., an indication of the type of information the user is interested in or specific topics that interest the user), location data, or model information of the computing device. The one or more central server devices may accumulate this manifest information for multiple different complications associated with a single data provider, as well as for multiple complications across different respective data providers. With this manifest information, the one or more central server devices may formulate a list of potential complications that may be added to a graphical user interface of computing device 10. Computing device 10 may receive this list from the one or more central server devices and store the list in manifest data store 26.

Computing device 10 may send a selection of a first complication from the received list to the one or more central server devices. Computing device 10 may then receive the requirement data (i.e., the manifest information) associated with the first complication and store the received requirement information in manifest data store 26. Upon receipt of the manifest information and prior to any further information being sent to the one or more central server devices or the data provider, UI module 20 may prompt the user of computing device 10 for explicit consent to send the required manifest data to the data provider. For example, prior to retaining personal preference information or sending device information associated with the user of computing device 10, UI module 20 to present a user interface via UID 12 that requests a user to select a box, click a button, state a voice input, or otherwise provide a specific input to the user interface that is interpreted by computing device 10 as unambiguous, affirmative consent for complication module 22 to collect and make use of the user's personal preference information and the device information.

Upon receiving the explicit consent to provide the required information to the data provider, computing device 10 may send the personal preference information and the device characteristics to the one or more central server devices and/or the data provider. At this point, computing device 10 may continue to execute the remainder of the techniques described herein. For instance, after computing device 10 receives user input indicating that the user consents to provide the data provider with personal preference information about the user and device information describing computing device 10 or a surrounding environment of computing device 10, computing device 10 may provide the manifest information to the one or more central server devices and/or the data provider. Responsive to receiving the manifest information, the data provider may begin sending complication information to computing device 10.

Complication module 22 may request, from data provider 34 associated with complication 16, packaged complication data associated with or being representative for the complication. In the example of FIG. 2, the complication may be associated with weather information, and the data provider may be a host of a weather service application. At a first time, complication module 22 of computing device 10 may request for the data provider associated with the weather complication to provide new weather alerts or updates that may be of interest to the user, such as weather updates for a current location of computing device 10.

Complication module 22 may receive, from the weather data provider, the packaged complication data. The packaged complication data may include a plurality of complication data updates associated with the weather complication and timing data that defines a respective length of time that each complication data update of the plurality of complication data updates is to be displayed on UID 12. For instance, the weather data provider may accumulate updates to the temperature, precipitation conditions, wind speed and direction, and daylight hours (i.e., sunrise and sunset times). The weather data provider may proceed to send the four complication data updates to computing device 10 in a single packaged of complication data. Complication module 22 may receive the weather updates, as well as timing data for the weather updates via a network from the weather data provider.

In some examples, prior to requesting the packaged complication data, complication module 22 may activate communication unit 44. For instance, complication module 22 may utilize communication unit 44 to communicate with the one or more central server devices and/or the data provider over a network. Due to computing device 10 only periodically communicating with outside servers or data providers, it may be unnecessary to supply power to communication unit 44 when computing device 10 is not currently sending a request or awaiting a response. As such, prior to computing device 10 requesting the packaged complication data, communication unit 44 may be inactive. As such, prior to sending the request to the data provider, complication module 22 may activate communication unit 44. Similarly, upon receiving the packaged complication data and the timing data, complication module 22 may deactivate communication unit 44 until a later time at which complication module 22 is to make another request for subsequent packaged complication data, thereby reducing the overall power consumption of computing device 10.

Responsive to receiving the packaged complication data, UI module 20 of computing device 10 may output, for display in a user interface at UID 12, a graphical user interface including current time information and the complication. The complication includes a graphical indication of a first complication data update from the plurality of complication data updates included in the packaged complication data. In the example of FIG. 2, the first weather update of the multiple weather updates included in the packaged complication data may be a current temperature at the location of computing device 10. At a particular time, UI module 20 may output a graphical indication that shows the updated current temperature at the location of computing device 10. In some examples, if UID 12 were to receive an indication of user input selecting the graphical indication 18A, UI module 20 may output a more detailed weather forecast of the local area that contains computing device 10.

In some cases, the timing data may evenly distribute the display time across each of the complication data updates. For instance, if complication module 22 updates the weather complication once every sixty minutes, and there are four complication data updates in the packaged complication data, the timing data may indicate that each complication data update is to be displayed for fifteen minutes. In other instances, the timing data may uniquely assign times to each of the complication data updates. For instance, a more important update for the weather complication, such as a temperature or a precipitation status, may be displayed for longer than the sunrise and sunset times. In some other instances, the timing data may be such that the complication data updates are fully displayed and replaced prior to requesting a subsequent update from the data provider. In some such instances, UI module 20 may either redisplay the first complication data update and begin the cycle again until complication module 22 issues a subsequent request. In other such instances, UI module 20 may cease displaying complication data updates for the given complication until complication module 22 issues a subsequent request. In still other such instances, complication module 22 may issue a subsequent request for complication data updates upon the dismissal of the final complication data update in the previous packaged complication data.

Complication module 22 may determine, based on the timing data, a time at which to output a second graphical indication of a second complication data update of the plurality of complication data updates for display at UID 12. For instance, the timing data received in the packaged complication data update may indicate that graphical indication 18A should be displayed at UID 12 for a period of fifteen minutes. As such, complication module 22 may determine that, at a time fifteen minutes after displaying the first graphical indication of the first complication data update, UI module 20 should remove the first graphical indication 18A from UID 12 and the second display graphical indication associated with the second complication data update in its place.

UI module 20 may replace, at the second time and on UID 12, the first graphical indication of the first complication data update with the second graphical indication of the second complication data update. As described above, complication module 22 determines that the second graphical indication should be output at a time fifteen minutes after displaying the first complication data update, as defined in the received timing data. As such, at time T3, UI module 20 may remove the first graphical indication for the first complication data update and instead display the second graphical indication for the second complication data update in user interface 14C. In the example of FIG. 2, the second complication data update may be associated with the current precipitation conditions. As such, UI module 20 may remove the graphical indication of the current temperature and replace it with a graphical indication of the current precipitation status (e.g., sunny, rain showers, snow showers, etc.) in the local area containing computing device 10. In some examples, if UID 12 were to receive an indication of user input selecting the second graphical indication, UI module 20 may begin to output a weather radar map on UID 12 of computing device 10.

In some examples, computing device 10 may handle multiple complications simultaneously in a manner similar to that described above. For instance, complication module 22 may send a second selection of a second complication, such as a news application, from the compiled list received from the one or more central server devices. Complication module may then receive the requirement data, or the manifest information, associated with the second complication. In some examples, the second complication is associated with a second data provider. However, in other examples, the data provider associated with the first complication may also be associated with the second complication. For instance, the host of the news application may also host a weather update service. As such, both the first and the second complication may be associated with the same data provider.

Similarly to when the first requirement data is received, upon receipt of the manifest information for the second complication and prior to any further information being sent to the one or more central server devices or the second data provider, UI module 20 may prompt the user of computing device 10 for explicit consent to send the second required manifest data to the second data provider. For example, prior to retaining personal preference information or sending device information associated with the user of computing device 10 as it pertains to the second complication, UI module 20 to present a user interface via UID 12 that requests a user to select a box, click a button, state a voice input, or otherwise provide a specific input to the user interface that is interpreted by computing device 10 as unambiguous, affirmative consent for complication module 22 to collect and make use of the user's personal preference information and the device information.

In some instances, complication module 22 may handle each complication completely independently of one another. In other words, complication module 22 may request updates in accordance with the respective minimum update frequency of the respective complication or a manually entered update frequency of the respective complication, irrespective of other minimum update frequencies.

In other instances, complication module 22 may synchronize the update requests for the multiple complications. In other words, complication module 22 may send update requests for complication data updates at times other than the minimum update frequency or the manually entered update frequency for the respective complication. For instance, when the minimum update frequency for the first complication is greater than the minimum update frequency for the second complication, complication module 22 may determine an actual update frequency for the second complication. In doing so, complication module 22 may determine if the first minimum update frequency is a multiple of the second minimum update frequency. If the first minimum update frequency is a multiple of the second minimum update frequency, complication module 22 may determine the actual update frequency to be the second minimum update frequency. For instance, complication module 22 may request complication data updates for the first complication once every thirty minutes, and the complication module 22 may request complication data updates for the second complication once every ninety minutes. In such an instance, complication module 22 may simply request complication data updates for the second complication in accordance with the second minimum update frequency. As such, complication module 22 may request updates for the first complication only twice and then request updates for both the first complication and the second complication together once.

Conversely, if the first minimum update frequency is not a multiple of the second minimum update frequency, complication module 22 may determine a time period corresponding to the actual update frequency to be a multiple of a time period corresponding to the first minimum update frequency. For instance, complication module 22 may request complication data updates for the first complication once every thirty minutes, and the complication module 22 may request complication data updates for the second complication once every seventy-five minutes. In such an instance, complication module 22 may request complication data updates for the second complication once every sixty minutes. As such, complication module 22 may request updates for the first complication only once and then request updates for both the first complication and the second complication together once. Synchronizing the update frequencies in such a way may efficiently utilize the periodic communications such that computing device 10 complies with the manifest data provided by the data providers while still issuing complication data update requests as periodically as possible.

In still another example, complication module 22 may simply use the minimum update frequency of the complication that must be updates most frequently as the actual update frequency for all complications. For instance, computing device 10 may be outputting three complications for display. A first complication may have a minimum update frequency of ten minutes. A second complication may have a minimum update frequency of thirty minutes. A third complication may have a minimum update frequency of forty-five minutes. In this instance, complication module 22 may request complication data updates from each of the respective data providers once every ten minutes, or the most frequent update frequency.

Complication module 22 may send the various update requests via communication unit 44 directly to the respective data provider associated with the complication being updated. In other instances, complication module 22 may send each of the update requests via communication unit 44 to the one or more central server devices, which then distributes the update requests to the respective data provider. In still other instances, complication module 22 may send each of the update requests via communication unit 44 to a companion computing device, such as a smartphone or a tablet computer, which forwards update requests to either the one or more central server devices or the respective data providers. By limiting the amount of outside devices that communication unit 44 contacts, the overall communication process may be simplified, thereby reducing the amount of power that may be required to retrieve the complication data.

In the examples where complication module 22 synchronizes the distribution of the update requests, complication module 22 may request, at a third time and from the second data provider, second packaged complication data associated with the second complication, with the second packaged complication data containing a second plurality of complication data updates and second timing data that defines a respective length of time that each complication data update of the second plurality of complication data updates is to be displayed on UID 12. At the same time, complication module 22 may also request, from the first data provider, third packaged complication data associated with the first complication, with the third packaged complication data containing a third plurality of complication data updates and third timing data that defines a respective length of time that each complication data update of the third plurality of complication data updates is to be displayed on UID 12. Complication module 22 may then receive the second packaged complication data and the third complication data from the respective data providers.

Although computing device 10 may synchronize the requests, computing device 10 may still handle the respective complication data updates for a particular complication independently from other complications. For instance, in the example of FIG. 2, complication module 22 may receive a package of four complication data updates for the weather complication and a package of three updates for the news complication. Furthermore, the timing data for the weather complication may indicate that the complication data updates are to rotated every five minutes, and the timing data for the news application may indicate that the complication data updates are to be rotated every eight minutes. In such instances, complication module 22 may handle the rotation of the complication data updates independently of one another and according to the respective timing data received with the respective packaged complication data. By handling the complications independently of one another once the packaged complication data is received for each complication, each complication may have a unique feel and implementation on computing device 10. Furthermore, this independent handling of the complications may reduce coordination between data providers and increase the utility of each complication on computing device 10.

Computing device 10 may continue the synchronization of the multiple complications. For instance, in the example of the weather complication and the news complication, complication module 22 may determine a time to request updates from both respective data providers, with the time being the actual update frequency determined above added to the time the news complication was previously requested. At that determined time, complication module 22 may request packaged complication data from both the weather complication data provider and the news complication data provider.

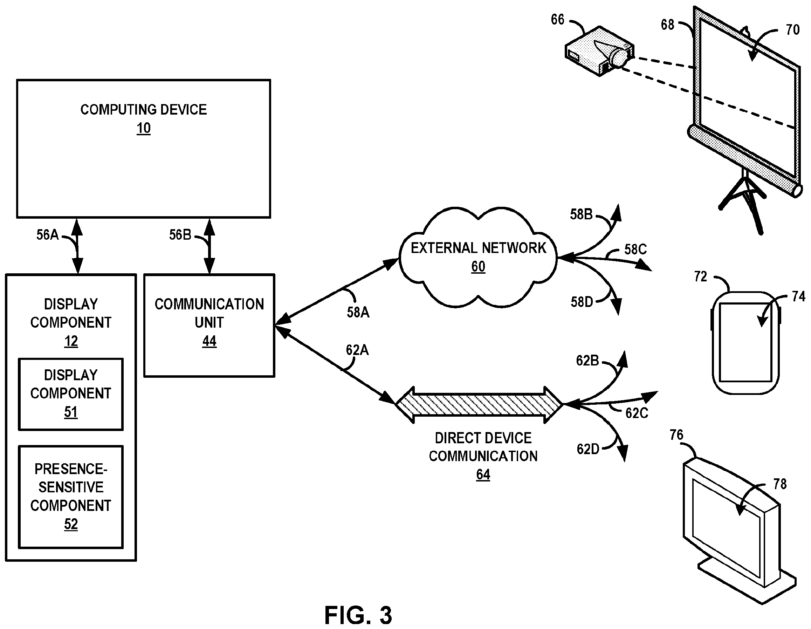

FIG. 3 is a block diagram illustrating an example system that includes a computing device that outputs screen content for display at a remote device, in accordance with one or more techniques of the present disclosure. Screen content, generally, may include any visual information that may be output for display, such as text, images, a group of moving images, etc. The example shown in FIG. 3 includes a computing device 10, display component 12, communication unit 44, projector 66, projector screen 68, mobile device 72, and visual display component 76. Although shown for purposes of example in FIGS. 1 and 2 as a stand-alone computing device 10, a computing device such as computing device 10 may, generally, be any component or system that includes a processor or other suitable computing environment for executing software instructions and, for example, need not include a display component.

As shown in the example of FIG. 3, computing device 10 may be a processor that includes functionality as described with respect to processor 40 in FIG. 2. In such examples, computing device 10 may be operatively coupled to display component 12 by a communication channel 56A, which may be a system bus or other suitable connection. Computing device 10 may also be operatively coupled to communication unit 44, further described below, by a communication channel 56B, which may also be a system bus or other suitable connection. Although shown separately as an example in FIG. 3, computing device 10 may be operatively coupled to display component 12 and communication unit 44 by any number of one or more communication channels.

In other examples, such as illustrated previously by computing device 10 in FIG. 1 and computing device 10 in FIG. 2, a computing device may refer to a portable or mobile device such as a mobile phone (including smart phone), laptop computer, smartwatch, etc. In some examples, a computing device may be a desktop computer, tablet computer, smart television platform, gaming console, remote controller, electronic camera, personal digital assistant (PDA), server, mainframe, etc.

Display component 12, like display component 12 as shown in FIG. 1, may include display component 51 and presence-sensitive input component 52. Display component 51 may, for example, receive data from computing device 10 and display the screen content. In some examples, presence-sensitive input component 52 may determine one or more user inputs (e.g., continuous gestures, multi-touch gestures, single-touch gestures, etc.) at display component 12 using capacitive, inductive, and/or optical recognition techniques and send indications of such user input to computing device 10 using communication channel 56A. In some examples, presence-sensitive input component 52 may be physically positioned on top of display component 51 such that, when a user positions an input unit over a graphical element displayed by display component 51, the location at which presence-sensitive input component 52 corresponds to the location of display component 51 at which the graphical element is displayed. In other examples, presence-sensitive input component 52 may be positioned physically apart from display component 51, and locations of presence-sensitive input component 52 may correspond to locations of display component 51, such that input can be made at presence-sensitive input component 52 for interacting with graphical elements displayed at corresponding locations of display component 51.

As shown in FIG. 3, computing device 10 may also include and/or be operatively coupled with communication unit 44. Communication unit 44 may include functionality of communication unit 44 as described in FIG. 2. Examples of communication unit 44 may include a network interface card, an Ethernet card, an optical transceiver, a radio frequency transceiver, or any other type of device that can send and receive information. Other examples of such communication units may include Bluetooth, 3G, and Wi-Fi radios, Universal Serial Bus (USB) interfaces, etc. Computing device 10 may also include and/or be operatively coupled with one or more other devices, e.g., input components, output components, memory, storage devices, etc. that are not shown in FIG. 3 for purposes of brevity and illustration.

FIG. 3 also illustrates a projector 66 and projector screen 68. Other such examples of projection devices may include electronic whiteboards, holographic display components, and any other suitable devices for displaying screen content. Projector 66 and projector screen 68 may include one or more communication units that enable the respective devices to communicate with computing device 10. In some examples, the one or more communication units may enable communication between projector 66 and projector screen 68. Projector 66 may receive data from computing device 10 that includes screen content. Projector 66, in response to receiving the data, may project the screen content onto projector screen 68. In some examples, projector 66 may determine one or more user inputs (e.g., continuous gestures, multi-touch gestures, single-touch gestures, etc.) at projector screen using optical recognition or other suitable techniques and send indications of such user input using one or more communication units to computing device 10. In such examples, projector screen 68 may be unnecessary, and projector 66 may project screen content on any suitable medium and detect one or more user inputs using optical recognition or other such suitable techniques.

Projector screen 68, in some examples, may include a presence-sensitive display 70. Presence-sensitive display 70 may include a subset of functionality or all of the functionality of display component 12 as described in this disclosure. In some examples, presence-sensitive display 70 may include additional functionality. Projector screen 68 (e.g., an electronic whiteboard), may receive data from computing device 10 and display the screen content. In some examples, presence-sensitive display 70 may determine one or more user inputs (e.g., continuous gestures, multi-touch gestures, single-touch gestures, etc.) at projector screen 68 using capacitive, inductive, and/or optical recognition techniques and send indications of such user input using one or more communication units to computing device 10.

FIG. 3 also illustrates mobile device 72 and visual display component 76. Mobile device 72 and visual display component 76 may each include computing and connectivity capabilities. Examples of mobile device 72 may include e-reader devices, convertible notebook devices, hybrid slate devices, etc. Examples of visual display component 76 may include other semi-stationary devices such as televisions, computer monitors, etc. As shown in FIG. 3, mobile device 72 may include a presence-sensitive display 74. Visual display component 76 may include a presence-sensitive display 78. Presence-sensitive displays 74, 78 may include a subset of functionality or all of the functionality of display component 12 as described in this disclosure. In some examples, presence-sensitive displays 74, 78 may include additional functionality. In any case, presence-sensitive display 74, for example, may receive data from computing device 10 and display the screen content. In some examples, presence-sensitive display 78 may determine one or more user inputs (e.g., continuous gestures, multi-touch gestures, single-touch gestures, etc.) at projector screen using capacitive, inductive, and/or optical recognition techniques and send indications of such user input using one or more communication units to computing device 10.

As described above, in some examples, computing device 10 may output screen content for display at display component 12 that is coupled to computing device 10 by a system bus or other suitable communication channel. Computing device 10 may also output screen content for display at one or more remote devices, such as projector 66, projector screen 68, mobile device 72, and visual display component 76. For instance, computing device 10 may execute one or more instructions to generate and/or modify screen content in accordance with techniques of the present disclosure. Computing device 10 may output the data that includes the screen content to a communication unit of computing device 10, such as communication unit 44. Communication unit 44 may send the data to one or more of the remote devices, such as projector 66, projector screen 68, mobile device 72, and/or visual display component 76. In this way, computing device 10 may output the screen content for display at one or more of the remote devices. In some examples, one or more of the remote devices may output the screen content at a display component that is included in and/or operatively coupled to the respective remote devices.

In some examples, computing device 10 may not output screen content at display component 12 that is operatively coupled to computing device 10. In other examples, computing device 10 may output screen content for display at both a display component 12 that is coupled to computing device 10 by communication channel 56A, and at one or more remote devices. In such examples, the screen content may be displayed substantially contemporaneously at each respective device. For instance, some delay may be introduced by the communication latency to send the data that includes the screen content to the remote device. In some examples, screen content generated by computing device 10 and output for display at display component 12 may be different than screen content display output for display at one or more remote devices.

Computing device 10 may send and receive data using any suitable communication techniques. For example, computing device 10 may be operatively coupled to external network 60 using network link 58A. Each of the remote devices illustrated in FIG. 3 may be operatively coupled to external network 60 by one of respective network links 58B, 58C, and 58D. External network 60 may include network hubs, network switches, network routers, etc., that are operatively inter-coupled thereby providing for the exchange of information between computing device 10 and the remote devices illustrated in FIG. 3. In some examples, network links 58A-58D may be Ethernet, ATM or other network connections. Such connections may be wireless and/or wired connections.

In some examples, computing device 10 may be operatively coupled to one or more of the remote devices included in FIG. 3 using direct device communication 64. Direct device communication 64 may include communications through which computing device 10 sends and receives data directly with a remote device, using wired or wireless communication. That is, in some examples of direct device communication 64, data sent by computing device 10 may not be forwarded by one or more additional devices before being received at the remote device, and vice-versa. Examples of direct device communication 64 may include Bluetooth, Near-Field Communication, Universal Serial Bus, WiFi, infrared, etc. One or more of the remote devices illustrated in FIG. 3 may be operatively coupled with computing device 10 by communication links 62A-62D. In some examples, communication links 62A-62D may be connections using Bluetooth, Near-Field Communication, Universal Serial Bus, infrared, etc. Such connections may be wireless and/or wired connections.

As discussed above, after receiving explicit consent to provide a data provider with personal reference information and device information that the data provider may request, computing device 10 may request packaged complication data from a data provider associated with a complication. The packaged complication data may include multiple complication data updates for the complication and timing data that defines a length of time that each of the complication data updates should be displayed on one of projector 66, projector screen 68, mobile device 72, and visual display component 76. After receiving the packaged complication data, computing device 10 may output a graphical user interface including current time information and the complication for display at one of projector 66, projector screen 68, mobile device 72, and visual display component 76. The complication includes a graphical indication of a first complication data update from the plurality of complication data updates included in the packaged complication data. Using the timing data, computing device 10 determines a time at which to replace the first complication data update with a different complication data update on one of projector 66, projector screen 68, mobile device 72, and visual display component 76. At the determined time, without having subsequent contact with the data provider, computing device 10 replaces the first complication data update on one of proj ector 66, projector screen 68, mobile device 72, and visual display component 76 with a graphical indication on of a second complication data update included in the same packaged complication data.

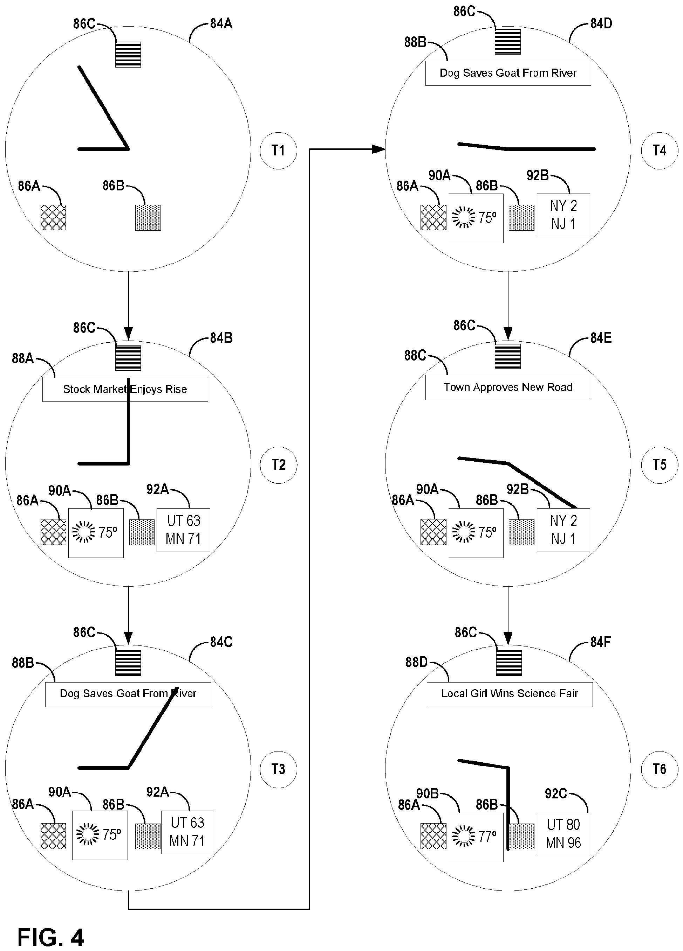

FIG. 4 is a timing diagram illustrating timing characteristics for example user interfaces 84A-84F of an example computing device 10 (not pictured) configured to output complication data updates received in packaged complication data, in accordance with one or more aspects of the present disclosure. FIG. 4 is described below within the context of system 1 of FIG. 1 and computing device 10 of FIG. 2. FIG. 4 illustrates a period of time that starts at T1 and ends at T6 during which computing device 10 receives packaged complication data and outputs complication data updates at varying intervals based on the timing data.

At time T1, graphical user interface 84A shows three complications 86A, 86B, and 86C. In the example of FIG. 4, complication 86A may be associated with a weather application. Complication 86B may be associated with a sports application. Finally, complication 86C may be associated with a news application.

At some point between time T1 and time T2, computing device 10 may send a request for complication data updates to each of the respective data providers associated with respective complications 86A-86C. In some instances, two or more of complications 86A-86C may be associated with a same data provider. In other instances, each of complications 86A-86C may be associated with different data providers. In any case, computing device 10 may send the requests for the complication data updates directly to the respective data providers. In other instances, computing device 10 may instead send the update requests to one or more central server devices that distributes the update requests to the respective data providers. Computing device 10 may receive the respective packaged complication data updates in a similar manner. In other words, computing device 10 may receive the respective packaged complication data updates either directly from the respective data provider or from the respective data provider via the one or more central server devices.

Computing device 10 may receive timing data for each of the respective complications 86A-86C that defines the length of time that each update should be displayed. In the example of FIG. 4, the timing data for the first complication may indicate that each update should be displayed for thirty minutes. Further, the timing data for the second complication may indicate that each update should be displayed for fifteen minutes. Finally, the timing data for the third complication may indicate that each update should be displayed for ten minutes. After receipt of the packaged complication data and the timing data, computing device 10 may deactivate a communication unit in computing device 10 to conserve power.

At time T2, computing device 10 may output graphical user interface 84B that includes a first complication data update for each of complications 86A-86C. Complication data update 88A may be an update for complication 86C that contains a news story entitled "Stock Market Enjoys Rise." Complication data update 90A may be an update for complication 86A that contains the current temperature and precipitation status. Finally, complication data update 92A may be an update for complication 86B that contains be a score update for a basketball game between Utah and Minnesota.

At time T3, computing device 10 may determine that the timing data for complication 86C indicates that complication data update 88A must be replaced. As such, at time T3, computing device 10 may output graphical user interface 84C that includes complication data update 88B, along with the previously displayed complication data updates 90A and 92A. Complication data update 88B for complication 86C may include a news story entitled "Dog Saves Goat from River."

At time T4, computing device 10 may determine that the timing data for complication 86B indicates that complication data update 92A must be replaced. As such, at time T4, computing device 10 may output graphical user interface 84D that includes complication data update 92B, along with the previously displayed complication data updates 90A and 88B. Complication data update 92B for complication 86B may include score update for a hockey game between New York and New Jersey.

At time T5, computing device 10 may determine that the timing data for complication 86C indicates that complication data update 88B must be replaced. As such, at time T5, computing device 10 may output graphical user interface 84E that includes complication data update 88C, along with the previously displayed complication data updates 90A and 92B. Complication data update 88C for complication 86C may include a news story entitled "Town Approves New Road."

In synchronizing the complication requests, computing device 10 may determine that requests should be made to the data providers once every thirty minutes. As such, prior to time T6, computing device 10 may reactivate the previously deactivated communication unit. Once the communication unit is reactivated, computing device 10 may issue a subsequent request for complication data updates to each of the respective data providers for complications 86A-86C, either directly to the respective data providers or to the respective data providers via one or more central server devices. Upon receiving the subsequent packaged complication data from each of the respective data providers, computing device 10 may again deactivate the communication unit to conserve power.

At time T6, computing device 10 may output graphical user interface 84F that includes a first complication data update from the most recently received packaged complication data for each of complications 86A-86C. Complication data update 88D may be an update for complication 86C that contains a news story entitled "Local Girl wins Science Fair." Complication data update 90B may be an update for complication 86A that contains the current temperature and precipitation status. Finally, complication data update 92C may be an update for complication 86B that contains be a more recent score update for the basketball game between Utah and Minnesota.

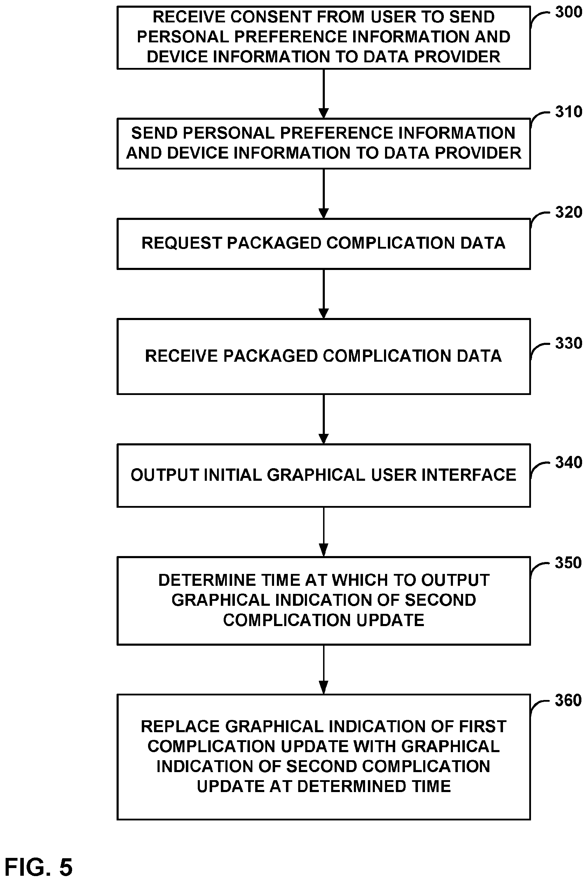

FIG. 5 is a flowchart illustrating further example operations of an example computing device 10 configured to output complication data updates received in packaged complication data, in accordance with one or more aspects of the present disclosure. The operations of computing device 10 are described within the context of system 1 of FIG. 1 and computing device 10 of FIG. 2. For example, in the example of FIG. 5, computing device 10 may be a computerized watch.

Computing device 10 may receive consent from the user to make use of and send personal preference information and device information to data provider 34 (300). For instance, prior to any of the below interactions, or in response to identifying potential personal information, complication module 22 may cause UI module 20 to request permission from the user to store and make use of personal preference information and device information obtained during interactions with complication module 22 and the user. It should be understood that computing device 10 may not require a user to consent prior to each time that complication module 22 wants to make use of or store personal preference information and device information. For example, if computing device 10 receives consent once a year, once a day, or even just one time (e.g., after initial product purchase, set up, etc.) computing device 10 may treat that prior consent as consent to make use and store personal preference information and device information in the future. As one example of how a user may provide consent, the user may provide a voice input "yeah that's ok to store information about me" and in response to the voice input, complication module 22 may begin maintaining personal preference records and device information about the user in a data store. After receiving such consent, computing device 10 may send the personal preference information and the device information to data provider 34 (310).

Computing device 10 may request, from data provider 34 associated with complication 16, packaged complication data associated with the complication (320). In the example of FIG. 5, the complication may be a sports scoreboard that provides updates to current sporting events. For instance, at some time, complication module 22 of computing device 10 may request for data provider 34 to provide sports updates that may be of interest to the user.

Complication module 22 of computing device 10 may receive, from data provider 34, the packaged complication data (330). The packaged complication data may include a plurality of complication data updates associated with complication 16 and timing data that defines a respective length of time that each complication data update of the plurality of complication data updates is to be displayed on UID 12. For instance, data provider 34 may accumulate updated scores for ten sporting events to send to computing device 10. Complication module 22 may receive the score updates and timing data for the score updates via network 30 from data provider 34.

Responsive to receiving the packaged complication data, UI module 20 of computing device 10 may output, at a first time and for display in user interface 14B at UID 12, a graphical indication of a first complication data update of the plurality of complication data updates (340). In the example of FIG. 5, the first score update of the multiple score updates included in the packaged complication data may be for a local basketball game. At time T2, UI module 20 may output graphical indication 18A that shows the score update and the current time remaining in the current quarter of the basketball game in the first complication data update. In some examples, if UID 12 were to receive an indication of user input selecting graphical indication 18A, UI module 20 may output a box score of the local basketball game on UID 12 of computing device 10.

Complication module 22 may determine, based on the first time and the timing data, a second time at which to output a graphical user interface including current time information and the complication for display at UID 12 (350). The complication includes a first complication data update from the plurality of complication data updates included in the packaged complication data. For instance, the timing data received in the packaged complication data update may indicate that the first graphical indication should only be displayed at UID 12 for a period of three minutes. As such, complication module 22 may determine that at a time three minutes, UI module 20 should remove the first graphical indication from UID 12 and display the second graphical indication in its place.

UI module 20 may replace, at the second time and on UID 12, graphical indication 18A of the first complication data update with graphical indication 18B of the second complication data update (360). At the determined time, UI module 20 may remove the graphical indication of the score update for the local basketball game and replace it with a graphical indication of a second complication data update, such as a score update for a local hockey game.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples of the disclosure have been described. Any combination of the described systems, operations, or functions is contemplated. These and other examples are within the scope of the following claims.

## Claims

1. A method comprising:
activating, by a computerized watch (10), a communication unit (44) operatively coupled to the computerized watch (10);
requesting, by the computerized watch (10), via the activated communication unit (44) and from a first data provider (34) associated with a first complication (16), a first package of complication data associated with the first complication (16), wherein the first complication (16) comprises a first graphical notification element on a display device (12) of the computerized watch (10);
receiving, by the computerized watch (10), via the activated communication unit (44) and from the first data provider (34), the package of complication data, wherein the package of complication data comprises a plurality of complication data updates associated with the first complication (16) and timing data, wherein the timing data defines a respective length of time that a graphical indication of data of each complication data update of the plurality of complication data updates is to be included by the first complication (16) displayed on the display device (12), and wherein the plurality of complication data updates includes at least a first complication data update and a second complication data update;
after receiving the package of complication data, deactivating, by the computerized watch (10), the communication unit (44);
responsive to receiving the package of complication data, outputting, by the computerized watch (10) at a first time for display at the display device (12), a graphical user interface (14B, 84A-F) including current time information and a plurality of complications (86A-C) including the first complication (16, 86A) and a second complication (86B) associated with a second data provider different than the first data provider, wherein the first complication (16) includes the graphical indication of data of the first complication data update, wherein the first complication (86A) has a first minimum update frequency, wherein the second complication (86B) has a second minimum update frequency, and wherein the first minimum update frequency is greater than the second minimum update frequency;
determining, by the computerized watch (10) and based on the first time and the respective length of time, defined by the timing data that the graphical indication of data of the first complication data update is to be included by the first complication (16) displayed on the display device (12), a second time at which to output the graphical indication of data of the second complication data update for display on the display device (12);
replacing, by the computerized watch (10) at the second time and on the display device (12), the graphical indication of data of the first complication data update with the graphical indication of data of the second complication data update; and
determining, by the computerized watch (10), an actual update frequency for the second complication (86B), wherein determining the actual update frequency comprises:
determining, by the computerized watch (10), whether the first minimum update frequency is a multiple of the second minimum update frequency;
responsive to determining that the first minimum update frequency is a multiple of the second minimum update frequency, determining, by the computerized watch (10), the actual update frequency to be the second minimum update frequency; and
responsive to determining that the first minimum update frequency is not a multiple of the second minimum update frequency, determining, by the computerized watch (10), a time period corresponding to the actual update frequency to be a multiple of a time period corresponding to the first minimum update frequency,
wherein subsequent complication data updates for the second complication are requested in accordance with the determined actual update frequency.

2. The method of claim 1, further comprising:
requesting, by the computerized watch (10) at a third time, a second package of complication data from the second data provider associated with the second complication (86B) and a third package of complication data from the first data provider associated with the first complication (86A), wherein the second complication (86B) comprises a second graphical notification element on the display device (12);
receiving, by the computerized watch (10), the second package of complication data from the second data provider and the third package of complication data from the first data provider, wherein the second package of complication data comprises a second plurality of complication data updates associated with the second complication (86B) and second timing data, wherein the second timing data defines a respective length of time that a graphical indication of data of each complication data update of the second plurality of complication data updates is to be included by the second complication (86B) displayed on the display device (12), and wherein the third package of complication data comprises a third plurality of complication data updates associated with the first complication (86A) and third timing data, wherein the third timing data defines a respective length of time that a graphical indication of data of each complication data update of the third plurality of complication data updates is to be included by the first complication (86A) displayed on the display device (12);
responsive to receiving the second package of complication data and the third package of complication data, outputting, by the computerized watch (10) for display at the display device (12), a second graphical user interface (84A-F) including current time information, the first complication, and the second complication, wherein the first complication includes a graphical indication of data of a first complication data update of the third plurality of complication data updates, and wherein the second complication includes a graphical indication of data of a first complication data update of the second plurality of complication data updates;
determining, by the computerized watch (10) and based on the third time and the second timing data, a fourth time at which to output a graphical indication of a second complication data update of the second plurality of complication data updates for display at the display device (12);
replacing, by the computerized watch (10) at the fourth time and on the display device (12), the graphical indication of data of the first complication data update of the second plurality of complication data updates with the graphical indication of data of the second complication data update of the second plurality of complication data updates;
determining, by the computerized watch (10) and based on the third time and the third timing data, a fifth time at which to output a graphical indication of data of a second complication data update of the third plurality of complication data updates for display at the display device (12); and
replacing, by the computerized watch (10) at the fifth time and at the display device (12), the graphical indication of data of the first complication data update of the third plurality of complication data updates with the graphical indication of data of the second complication data update of the third plurality of complication data updates.

3. The method of claim 2, further comprising:
determining, by the computerized watch (10), a sixth time comprising the actual update frequency added to the third time;
requesting, by the computerized watch (10) at the sixth time and from the second data provider associated with the second complication, a fourth package of complication data associated with the second complication; and
requesting, by the computerized watch (10) at the sixth time and from the first data provider associated with the first complication, a fifth package of complication data associated with the first complication.

4. The method of any one of claims 1-3, wherein the complication (16) comprises a first complication, and wherein the method further comprises:
requesting, by the computerized watch (10) and from a server device, a list of one or more complications, wherein each of the one or more complications is associated with a respective data provider;
sending, by the computerized watch (10) and to the server device, a selection of the first complication from the list of one or more complications; and
receiving, by the computerized watch (10) and from the server device, first requirement data associated with the first complication, wherein the first requirement data includes a first minimum update frequency.

5. The method of claim 4, further comprising:
sending, by the computerized watch (10) and to the server device, a second selection of a second complication from the list of one or more complications; and
receiving, by the computerized watch (10) and from the server device, second requirement data associated with the second complication, wherein the second requirement data includes a second minimum update frequency.

6. The method of any one of claims 4-5, wherein the first requirement data further includes device characteristics comprising information requested by the data provider (34) that describes the computerized watch (10), wherein the device characteristics further comprise one or more of location data, a model of the computerized watch, and preference data, and wherein the method further comprises:
sending, by the computerized watch (10) and to the data provider (34), the device characteristics.

7. The method of any one of claims 1-6, wherein a difference between the second time and the first time comprises the respective length of time that the graphical indication of data of the first complication data update is to be included by the complication (16) displayed on the display device (12) as defined by the timing data.

8. The method of any one of claims 1-7, further comprising:
receiving, by the computerized watch (10), an indication of user input selecting the first complication data update; and
responsive to receiving the indication of user input, outputting, by the computerized watch (10) and for display at the display device (12), additional information associated with the first complication data update.

9. The method of any one of claims 1-8, wherein replacing the graphical indication of data of the first complication data update with the graphical indication of data of the second complication data update comprises:
removing, by the computerized watch (10), the graphical indication of data of the first complication data update from display at the display device (12); and
outputting, by the computerized watch (10) and for display at the display device (12), the graphical indication of data of the second complication data update.

10. A computerized watch (10) comprising:
at least one processor (40);
a communication unit (44); and
at least one non-transitory computer-readable storage medium storing instructions that are executable by the at least one processor (40) to:
activate the communication unit (44);
request (320), via the activated communication unit (44) and from a first data provider (34) associated with a first complication, a first package of complication data associated with the first complication, wherein the first complication (16) comprises a graphical notification element on a display device (12) of the computerized watch (10);
receive (330), from the first data provider (34) via the activated communication unit (44), the package of complication data, wherein the package of complication data comprises a plurality of complication data updates associated with the first complication (16) and timing data, wherein the timing data defines a respective length of time that a graphical indication of data of each complication data update of the plurality of complication data updates is to be included by the first complication (16) displayed at the display device (12), and wherein the plurality of complication data updates includes at least a first complication data update and a second complication data update;
after receiving the package of complication data, deactivate the communication unit (44);
responsive to receiving the package of complication data, output (340), at a first time and for display at the display device (12), a graphical user interface (14B, 84A-F) including current time information and a plurality of complications (86A-C) including the complication (16, 86A) and a second complication (86B) associated with a second data provider different than the first data provider, wherein the first complication (16) includes the graphical indication of data of the first complication data update, wherein the first complication (86A) has a first minimum update frequency, wherein the second complication (86B) has a second minimum update frequency, and wherein the first minimum update frequency is greater than the second minimum update frequency;
determine (350), based on the first time and the respective length of time, defined by the timing data that the graphical indication of data of the first complication data update is to be included by the first complication (16) displayed on the display device (12), a second time at which to output the graphical indication of data of the second complication data update for display on the display device (12);
replace (360), at the second time and on the display device (12), the graphical indication of data of the first complication data update with the graphical indication of data of the second complication data update; and
determine, by the computerized watch (10), an actual update frequency for the second complication (86B), wherein determining the actual update frequency comprises:
determine, by the computerized watch (10), whether the first minimum update frequency is a multiple of the second minimum update frequency;
responsive to determining that the first minimum update frequency is a multiple of the second minimum update frequency, determine, by the computerized watch (10), the actual update frequency to be the second minimum update frequency; and
responsive to determining that the first minimum update frequency is not a multiple of the second minimum update frequency, determine, by the computerized watch (10), a time period corresponding to the actual update frequency to be a multiple of a time period corresponding to the first minimum update frequency,
wherein subsequent complication data updates for the second complication are requested in accordance with the determined actual update frequency.

11. The computerized watch (10) of claim 10, wherein the instructions are further executable by the at least one processor (40) to perform any one of the methods of claims 1-9.

12. A non-transitory computer-readable storage medium storing instructions that, when executed, cause at least one processor (40) of a computerized watch (10) to perform any one of the methods of claims 1-9.

## Patentansprüche

1. Verfahren, umfassend:
Aktivieren, durch eine computergestützte Uhr (10), einer Kommunikationseinheit (44), die operativ mit der computergestützten Uhr (10) gekoppelt ist;
Anfordern, durch die computergestützte Uhr (10), über die aktivierte Kommunikationseinheit (44) und von einem ersten Datenanbieter (34), der mit einer ersten Komplikation (16) assoziiert ist, eines ersten Pakets von Komplikationsdaten, die mit der ersten Komplikation (16) assoziiert sind, wobei die erste Komplikation (16) ein erstes grafisches Benachrichtigungselement auf einem Anzeigegerät (12) der computergestützten Uhr (10) umfasst;
Empfangen, durch die computergestützte Uhr (10), über die aktivierte Kommunikationseinheit (44) und von dem ersten Datenanbieter (34), des Pakets von Komplikationsdaten, wobei das Paket von Komplikationsdaten eine Vielzahl von Komplikationsdatenaktualisierungen umfasst, die mit der ersten Komplikation (16) und Zeitgabedaten assoziiert sind, wobei die Zeitgabedaten eine jeweilige Zeitdauer definieren, für die eine grafische Angabe von Daten von jeder Komplikationsdatenaktualisierung der Vielzahl von Komplikationsdatenaktualisierungen durch die erste Komplikation (16), die auf dem Anzeigegerät (12) angezeigt wird, einbezogen werden soll, und wobei die Vielzahl von Komplikationsdatenaktualisierungen zumindest eine erste Komplikationsdatenaktualisierung und eine zweite Komplikationsdatenaktualisierung beinhaltet;
nach Empfangen des Pakets von Komplikationsdaten, Deaktivieren, durch die computergestützte Uhr (10), der Kommunikationseinheit (44);
in Reaktion auf das Empfangen des Pakets von Komplikationsdaten, Ausgeben, durch die computergestützte Uhr (10) zu einem ersten Zeitpunkt zur Anzeige auf dem Anzeigegerät (12), einer grafischen Benutzeroberfläche (14B, 84A-F), die aktuelle Zeitinformationen und eine Vielzahl von Komplikationen (86A-C) beinhaltet, einschließlich der ersten Komplikation (16, 86A) und einer zweiten Komplikation (86B), die mit einem zweiten Datenanbieter assoziiert ist, der sich von dem ersten Datenanbieter unterscheidet, wobei die erste Komplikation (16) die grafische Angabe von Daten der ersten Komplikationsdatenaktualisierung beinhaltet, wobei die erste Komplikation (86A) eine erste Mindestaktualisierungshäufigkeit aufweist, wobei die zweite Komplikation (86B) eine zweite Mindestaktualisierungshäufigkeit aufweist, und wobei die erste Mindestaktualisierungshäufigkeit größer als die zweite Mindestaktualisierungshäufigkeit ist;
Ermitteln, durch die computergestützte Uhr (10) und basierend auf dem ersten Zeitpunkt und der jeweiligen durch die Zeitgabedaten definierten Zeitdauer, während der die grafische Angabe von Daten der ersten Komplikationsdatenaktualisierung durch die erste Komplikation (16), die auf dem Anzeigegerät (12) angezeigt wird, einbezogen werden soll, eines zweiten Zeitpunkts, zu dem die grafische Angabe von Daten der zweiten Komplikationsdatenaktualisierung zur Anzeige auf dem Anzeigegerät (12) ausgegeben werden soll;
Ersetzen, durch die computergestützte Uhr (10) zu dem zweiten Zeitpunkt und auf dem Anzeigegerät (12), der grafischen Angabe von Daten der ersten Komplikationsdatenaktualisierung durch die grafische Angabe von Daten der zweiten Komplikationsdatenaktualisierung; und
Ermitteln, durch die computergestützte Uhr (10), einer tatsächlichen Aktualisierungshäufigkeit für die zweite Komplikation (86B), wobei das Ermitteln der tatsächlichen Aktualisierungshäufigkeit Folgendes umfasst:
Ermitteln, durch die computergestützte Uhr (10), ob die erste Mindestaktualisierungshäufigkeit ein Vielfaches der zweiten Mindestaktualisierungshäufigkeit ist;
in Reaktion auf das Ermitteln, dass die erste Mindestaktualisierungshäufigkeit ein Vielfaches der zweiten Mindestaktualisierungshäufigkeit ist, Ermitteln, durch die computergestützte Uhr (10), dass die tatsächliche Aktualisierungshäufigkeit die zweite Mindestaktualisierungshäufigkeit ist; und
in Reaktion auf das Ermitteln, dass die erste Mindestaktualisierungshäufigkeit kein Vielfaches der zweiten Mindestaktualisierungshäufigkeit ist, Ermitteln, durch die computergestützte Uhr (10), dass ein Zeitraum, der der tatsächlichen Aktualisierungshäufigkeit entspricht, ein Vielfaches eines Zeitraums ist, der der ersten Mindestaktualisierungshäufigkeit entspricht,
wobei nachfolgende Komplikationsdatenaktualisierungen für die zweite Komplikation gemäß der ermittelten tatsächlichen Aktualisierungshäufigkeit angefordert werden.

2. Verfahren nach Anspruch 1, ferner umfassend:
Anfordern, durch die computergestützte Uhr (10) zu einem dritten Zeitpunkt, eines zweiten Pakets von Komplikationsdaten von dem zweiten Datenanbieter, der mit der zweiten Komplikation (86B) assoziiert ist, und eines dritten Pakets von Komplikationsdaten von dem ersten Datenanbieter, der mit der ersten Komplikation (86A) assoziiert ist, wobei die zweite Komplikation (86B) ein zweites grafisches Benachrichtigungselement auf dem Anzeigegerät (12) umfasst;
Empfangen, durch die computergestützte Uhr (10), des zweiten Pakets von Komplikationsdaten von dem zweiten Datenanbieter und des dritten Pakets von Komplikationsdaten von dem ersten Datenanbieter, wobei das zweite Paket von Komplikationsdaten eine zweite Vielzahl von Komplikationsdatenaktualisierungen umfasst, die mit der zweiten Komplikation (86B) und zweiten Zeitgabedaten assoziiert sind, wobei die zweiten Zeitgabedaten eine jeweilige Zeitdauer definieren, während der eine grafische Angabe von Daten von jeder Komplikationsdatenaktualisierung der zweiten Vielzahl von Komplikationsdatenaktualisierungen durch die zweite Komplikation (86B), die auf dem Anzeigegerät (12) angezeigt wird, einbezogen werden soll, und wobei das dritte Paket von Komplikationsdaten eine dritte Vielzahl von Komplikationsdatenaktualisierungen umfasst, die mit der ersten Komplikation (86A) und dritten Zeitgabedaten assoziiert sind, wobei die dritten Zeitgabedaten eine jeweilige Zeitdauer definieren, während der eine grafische Angabe von Daten von jeder Komplikationsdatenaktualisierung der dritten Vielzahl von Komplikationsdatenaktualisierungen durch die erste Komplikation (86A), die auf dem Anzeigegerät (12) angezeigt wird, einbezogen werden soll;
in Reaktion auf das Empfangen des zweiten Pakets von Komplikationsdaten und des dritten Pakets von Komplikationsdaten, Ausgeben, durch die computergestützte Uhr (10) zur Anzeige auf dem Anzeigegerät (12), einer zweiten grafischen Benutzeroberfläche (84A-F), die aktuelle Zeitinformationen, die erste Komplikation und die zweite Komplikation beinhaltet, wobei die erste Komplikation eine grafische Angabe von Daten einer ersten Komplikationsdatenaktualisierung der dritten Vielzahl von Komplikationsdatenaktualisierungen beinhaltet, und wobei die zweite Komplikation eine grafische Angabe von Daten einer ersten Komplikationsdatenaktualisierung der zweiten Vielzahl von Komplikationsdatenaktualisierungen beinhaltet;
Ermitteln, durch die computergestützte Uhr (10) und basierend auf dem dritten Zeitpunkt und der zweiten Zeitgabedaten, eines vierten Zeitpunkts, zu dem eine grafische Angabe einer zweiten Komplikationsdatenaktualisierung der zweiten Vielzahl von Komplikationsdatenaktualisierungen zur Anzeige auf dem Anzeigegerät (12) ausgegeben werden soll;
Ersetzen, durch die computergestützte Uhr (10) zu dem vierten Zeitpunkt und auf dem Anzeigegerät (12), der grafischen Angabe von Daten der ersten Komplikationsdatenaktualisierung der zweiten Vielzahl von Komplikationsdatenaktualisierungen durch die grafische Angabe von Daten der zweiten Komplikationsdatenaktualisierung der zweiten Vielzahl von Komplikationsdatenaktualisierungen;
Ermitteln, durch die computergestützte Uhr (10) und basierend auf dem dritten Zeitpunkt und den dritten Zeitgabedaten, eines fünften Zeitpunkts, zu dem eine grafische Angabe von Daten einer zweiten Komplikationsdatenaktualisierung der dritten Vielzahl von Komplikationsdatenaktualisierungen zur Anzeige auf dem Anzeigegerät (12) ausgegeben werden soll; und
Ersetzen, durch die computergestützte Uhr (10) zu dem fünften Zeitpunkt und auf dem Anzeigegerät (12), der grafischen Angabe von Daten der ersten Komplikationsdatenaktualisierung der dritten Vielzahl von Komplikationsdatenaktualisierungen durch die grafische Angabe von Daten der zweiten Komplikationsdatenaktualisierung der dritten Vielzahl von Komplikationsdatenaktualisierungen.

3. Verfahren nach Anspruch 2, ferner umfassend:
Ermitteln, durch die computergestützte Uhr (10), eines sechsten Zeitpunkts, der die tatsächliche Aktualisierungshäufigkeit, hinzugefügt zu dem dritten Zeitpunkt, umfasst;
Anfordern, durch die computergestützte Uhr (10) zu dem sechsten Zeitpunkt und von dem zweiten Datenanbieter, der mit der zweiten Komplikation assoziiert ist, eines vierten Pakets von Komplikationsdaten, die mit der zweiten Komplikation assoziiert sind; und
Anfordern, durch die computergestützte Uhr (10) zu dem sechsten Zeitpunkt und von dem ersten Datenanbieter, der mit der ersten Komplikation assoziiert ist, eines fünften Pakets von Komplikationsdaten, die mit der ersten Komplikation assoziiert sind.

4. Verfahren nach einem der Ansprüche 1-3, wobei die Komplikation (16) eine erste Komplikation umfasst, und wobei das Verfahren ferner Folgendes umfasst:
Anfordern, durch die computergestützte Uhr (10) und von einem Servergerät, einer Liste von einer oder mehreren Komplikationen, wobei jede der einen oder mehreren Komplikationen mit einem jeweiligen Datenanbieter assoziiert ist;
Senden, durch die computergestützte Uhr (10) und an das Servergerät, einer Auswahl der ersten Komplikation aus der Liste von einer oder mehreren Komplikationen; und
Empfangen, durch die computergestützte Uhr (10) und von dem Servergerät, erster Anforderungsdaten, die mit der ersten Komplikation assoziiert sind, wobei die ersten Anforderungsdaten eine erste Mindestaktualisierungshäufigkeit beinhalten.

5. Verfahren nach Anspruch 4, ferner umfassend:
Senden, durch die computergestützte Uhr (10) und an das Servergerät, einer zweiten Auswahl einer zweiten Komplikation aus der Liste von einer oder mehreren Komplikationen; und
Empfangen, durch die computergestützte Uhr (10) und von dem Servergerät, zweiter Anforderungsdaten, die mit der zweiten Komplikation assoziiert sind, wobei die zweiten Anforderungsdaten eine zweite Mindestaktualisierungshäufigkeit beinhalten.

6. Verfahren nach einem der Ansprüche 4-5, wobei die ersten Anforderungsdaten ferner Geräteeigenschaften beinhalten, die Informationen umfassen, die durch den Datenanbieter (34) angefordert wurden und die die computergestützte Uhr (10) beschreiben, wobei die Geräteeigenschaften ferner eines oder mehrere von Standortdaten, einem Modell der computergestützten Uhr und Präferenzdaten umfassen, und wobei das Verfahren ferner Folgendes umfasst:
Senden, durch die computergestützte Uhr (10) und an den Datenanbieter (34), der Geräteeigenschaften.

7. Verfahren nach einem der Ansprüche 1-6, wobei ein Unterschied zwischen dem zweiten Zeitpunkt und dem ersten Zeitpunkt die jeweilige Zeitdauer umfasst, während der die grafische Angabe von Daten der ersten Komplikationsdatenaktualisierung durch die Komplikation (16), die auf dem Anzeigegerät (12) angezeigt wird, wie durch die Zeitgabedaten definiert einbezogen werden soll.

8. Verfahren nach einem der Ansprüche 1-7, ferner umfassend:
Empfangen, durch die computergestützte Uhr (10), einer Angabe einer Benutzereingabe, die die erste Komplikationsdatenaktualisierung auswählt; und
in Reaktion auf das Empfangen der Angabe der Benutzereingabe, Ausgeben, durch die computergestützte Uhr (10) und zur Anzeige auf dem Anzeigegerät (12), zusätzlicher Informationen, die mit der ersten Komplikationsdatenaktualisierung assoziiert sind.

9. Verfahren nach einem der Ansprüche 1-8, wobei das Ersetzen der grafischen Angabe von Daten der ersten Komplikationsdatenaktualisierung durch die grafische Angabe von Daten der zweiten Komplikationsdatenaktualisierung Folgendes umfasst:
Entfernen, durch die computergestützte Uhr (10), der grafischen Angabe von Daten der ersten Komplikationsdatenaktualisierung von der Anzeige auf dem Anzeigegerät (12); und
Ausgeben, durch die computergestützte Uhr (10) und zur Anzeige auf dem Anzeigegerät (12), der grafischen Angabe von Daten der zweiten Komplikationsdatenaktualisierung.

10. Computergestützte Uhr (10), umfassend:
zumindest einen Prozessor (40);
eine Kommunikationseinheit (44); und
zumindest ein nichtflüchtiges, computerlesbares Speichermedium, das Anweisungen speichert, die durch den zumindest einen Prozessor (40) ausführbar sind zum:
Aktivieren der Kommunikationseinheit (44);
Anfordern (320), durch die aktivierte Kommunikationseinheit (44) und von einem ersten Datenanbieter (34), der mit einer ersten Komplikation assoziiert ist, eines ersten Pakets von Komplikationsdaten, die mit der ersten Komplikation assoziiert sind, wobei die erste Komplikation (16) ein erstes grafisches Benachrichtigungselement auf einem Anzeigegerät (12) der computergestützten Uhr (10) umfasst;
Empfangen (330), von dem ersten Datenanbieter (34) über die aktivierte Kommunikationseinheit (44), des Pakets von Komplikationsdaten, wobei das Paket von Komplikationsdaten eine Vielzahl von Komplikationsdatenaktualisierungen umfasst, die mit der ersten Komplikation (16) und Zeitgabedaten assoziiert sind, wobei die Zeitgabedaten eine jeweilige Zeitdauer definieren, während der eine grafische Angabe von Daten von jeder Komplikationsdatenaktualisierung der Vielzahl von Komplikationsdatenaktualisierungen durch die erste Komplikation (16), die auf dem Anzeigegerät (12) angezeigt wird, einbezogen werden soll, und wobei die Vielzahl von Komplikationsdatenaktualisierungen zumindest eine erste Komplikationsdatenaktualisierung und eine zweite Komplikationsdatenaktualisierung beinhaltet;
nach Empfangen des Pakets von Komplikationsdaten, Deaktivieren der Kommunikationseinheit (44);
in Reaktion auf das Empfangen des Pakets von Komplikationsdaten, Ausgeben (340), zu einem ersten Zeitpunkt und zur Anzeige auf dem Anzeigegerät (12), einer grafischen Benutzeroberfläche (14B, 84A-F), die aktuelle Zeitinformationen und eine Vielzahl von Komplikationen (86A-C) beinhaltet, einschließlich der Komplikation (16, 86A) und einer zweiten Komplikation (86B), die mit einem zweiten Datenanbieter assoziiert ist, der sich von dem ersten Datenanbieter unterscheidet, wobei die erste Komplikation (16) die grafische Angabe von Daten der ersten Komplikationsdatenaktualisierung beinhaltet, wobei die erste Komplikation (86A) eine erste Mindestaktualisierungshäufigkeit aufweist, wobei die zweite Komplikation (86B) eine zweite Mindestaktualisierungshäufigkeit aufweist, und wobei die erste Mindestaktualisierungshäufigkeit größer als die zweite Mindestaktualisierungshäufigkeit ist;
Ermitteln (350), basierend auf dem ersten Zeitpunkt und der jeweiligen durch die Zeitgabedaten definierten Zeitdauer, während der die grafische Angabe von Daten der ersten Komplikationsdatenaktualisierung durch die erste Komplikation (16), die auf dem Anzeigegerät (12) angezeigt wird, einbezogen werden soll, eines zweiten Zeitpunkts, zu dem die grafische Angabe von Daten der zweiten Komplikationsdatenaktualisierung zur Anzeige auf dem Anzeigegerät (12) ausgegeben werden soll;
Ersetzen (360), zu dem zweiten Zeitpunkt und auf dem Anzeigegerät (12), der grafischen Angabe von Daten der ersten Komplikationsdatenaktualisierung durch die grafische Angabe von Daten der zweiten Komplikationsdatenaktualisierung; und
Ermitteln, durch die computergestützte Uhr (10), einer tatsächlichen Aktualisierungshäufigkeit für die zweite Komplikation (86B), wobei das Ermitteln der tatsächlichen Aktualisierungshäufigkeit Folgendes umfasst:
Ermitteln, durch die computergestützte Uhr (10), ob die erste Mindestaktualisierungshäufigkeit ein Vielfaches der zweiten Mindestaktualisierungshäufigkeit ist;
in Reaktion auf das Ermitteln, dass die erste Mindestaktualisierungshäufigkeit ein Vielfaches der zweiten Mindestaktualisierungshäufigkeit ist, Ermitteln, durch die computergestützte Uhr (10), dass die tatsächliche Aktualisierungshäufigkeit die zweite Mindestaktualisierungshäufigkeit ist; und
in Reaktion auf das Ermitteln, dass die erste Mindestaktualisierungshäufigkeit kein Vielfaches der zweiten Mindestaktualisierungshäufigkeit ist, Ermitteln, durch die computergestützte Uhr (10), dass ein Zeitraum, der der tatsächlichen Aktualisierungshäufigkeit entspricht, ein Vielfaches eines Zeitraums ist, der der ersten Mindestaktualisierungshäufigkeit entspricht,
wobei nachfolgende Komplikationsdatenaktualisierungen für die zweite Komplikation gemäß der ermittelten tatsächlichen Aktualisierungshäufigkeit angefordert werden.

11. Computergestützte Uhr (10) nach Anspruch 10, wobei die Anweisungen durch den zumindest einen Prozessor (40) ferner ausführbar sind, um eines der Verfahren nach Anspruch 1-9 durchzuführen.

12. Nichtflüchtiges computerlesbares Speichermedium, auf dem Anweisungen gespeichert sind, die, bei Ausführung, zumindest einen Prozessor (40) einer computergestützten Uhr (10) veranlassen, eines der Verfahren nach Anspruch 1-9 durchzuführen.

## Revendications

1. Procédé comprenant :
l'activation, par une montre informatisée (10), d'une unité de communication (44) couplée fonctionnellement à la montre informatisée (10) ;
la demande, par la montre informatisée (10), via l'unité de communication (44) activée et auprès d'un premier fournisseur de données (34) associé à une première complication (16), d'un premier ensemble de données de complication associé à la première complication (16), dans lequel la première complication (16) comprend un premier élément de notification graphique sur un dispositif d'affichage (12) de la montre informatisée (10) ;
la réception, par la montre informatisée (10), via l'unité de communication (44) activée et depuis le premier fournisseur de données (34), de l'ensemble de données de complication, dans lequel l'ensemble de données de complication comprend une pluralité de mises à jour de données de complication associées à la première complication (16) et des données de synchronisation, dans lequel les données de synchronisation définissent une durée respective pendant laquelle une indication graphique de données de chaque mise à jour de données de complication de la pluralité de mises à jour de données de complication doit être incluse par la première complication (16) affichée sur le dispositif d'affichage (12), et dans lequel la pluralité de mises à jour de données de complication comporte au moins une première mise à jour de données de complication et une deuxième mise à jour de données de complication ;
après la réception de l'ensemble de données de complication, la désactivation, par la montre informatisée (10), de l'unité de communication (44) ;
en réponse à la réception de l'ensemble de données de complication, la fourniture en sortie, par la montre informatisée (10) à un premier temps pour un affichage au niveau du dispositif d'affichage (12), d'une interface utilisateur graphique (14B, 84A à F) comportant des informations de temps actuel et une pluralité de complications (86A à C) comportant la première complication (16, 86A) et une deuxième complication (86B) associée à un deuxième fournisseur de données différent du premier fournisseur de données, dans lequel la première complication (16) comporte l'indication graphique de données de la première mise à jour de données de complication, dans lequel la première complication (86A) a une première fréquence de mise à jour minimale, dans lequel la deuxième complication (86B) a une deuxième fréquence de mise à jour minimale, et dans lequel la première fréquence de mise à jour minimale est supérieure à la deuxième fréquence de mise à jour minimale ;
la détermination, par la montre informatisée (10) et sur la base du premier temps et de la durée respective, définis par les données de synchronisation selon lesquelles l'indication graphique de données de la première mise à jour de données de complication doit être incluse par la première complication (16) affichée sur le dispositif d'affichage (12), d'un deuxième temps auquel fournir en sortie l'indication graphique de données de la deuxième mise à jour de données de complication pour un affichage sur le dispositif d'affichage (12) ;
le remplacement, par la montre informatisée (10) au deuxième temps et sur le dispositif d'affichage (12), de l'indication graphique de données de la première mise à jour de données de complication par l'indication graphique de données de la deuxième mise à jour de données de complication ; et
la détermination, par la montre informatisée (10), d'une fréquence de mise à jour effective pour la deuxième complication (86B), dans lequel la détermination de la fréquence de mise à jour effective comprend :
la détermination, par la montre informatisée (10), du fait que la première fréquence de mise à jour minimale est ou non un multiple de la deuxième fréquence de mise à jour minimale ;
en réponse à la détermination du fait que la première fréquence de mise à jour minimale est un multiple de la deuxième fréquence de mise à jour minimale, la détermination, par la montre informatisée (10), de la fréquence de mise à jour effective comme étant la deuxième fréquence de mise à jour minimale ; et
en réponse à la détermination du fait que la première fréquence de mise à jour minimale n'est pas un multiple de la deuxième fréquence de mise à jour minimale, la détermination, par la montre informatisée (10), d'une période de temps correspondant à la fréquence de mise à jour effective comme étant un multiple d'une période de temps correspondant à la première fréquence de mise à jour minimale,
dans lequel des mises à jour de données de complication ultérieures pour la deuxième complication sont demandées conformément à la fréquence de mise à jour effective déterminée.

2. Procédé selon la revendication 1, comprenant en outre :
la demande, par la montre informatisée (10) à un troisième temps, d'un deuxième ensemble de données de complication auprès du deuxième fournisseur de données associé à la deuxième complication (86B) et d'un troisième ensemble de données de complication auprès du premier fournisseur de données associé à la première complication (86A), dans lequel la deuxième complication (86B) comprend un deuxième élément de notification graphique sur le dispositif d'affichage (12) ;
la réception, par la montre informatisée (10), du deuxième ensemble de données de complication depuis le deuxième fournisseur de données et du troisième ensemble de données de complication depuis le premier fournisseur de données, dans lequel le deuxième ensemble de données de complication comprend une deuxième pluralité de mises à jour de données de complication associées à la deuxième complication (86B) et des deuxièmes données de synchronisation, dans lequel les deuxièmes données de synchronisation définissent une durée respective pendant laquelle une indication graphique de données de chaque mise à jour de données de complication de la deuxième pluralité de mises à jour de données de complication doit être incluse par la deuxième complication (86B) affichée sur le dispositif d'affichage (12), et dans lequel le troisième ensemble de données de complication comprend une troisième pluralité de mises à jour de données de complication associées à la première complication (86A) et des troisièmes données de synchronisation, dans lequel les troisièmes données de synchronisation définissent une durée respective pendant laquelle une indication graphique des données de chaque mise à jour de données de complication de la troisième pluralité de mises à jour de données de complication doit être incluse par la première complication (86A) affichée sur le dispositif d'affichage (12) ;
en réponse à la réception du deuxième ensemble de données de complication et du troisième ensemble de données de complication, la fourniture en sortie, par la montre informatisée (10) pour un affichage sur le dispositif d'affichage (12), d'une deuxième interface utilisateur graphique (84A à F) comportant des informations de temps actuel, la première complication, et la deuxième complication, dans lequel la première complication comporte une indication graphique de données d'une première mise à jour de données de complication de la troisième pluralité de mises à jour de données de complication, et dans lequel la deuxième complication comporte une indication graphique de données d'une première mise à jour de données de complication de la deuxième pluralité de mises à jour de données de complication ;
la détermination, par la montre informatisée (10) et sur la base du troisième temps et des deuxièmes données de synchronisation, d'un quatrième temps auquel fournir en sortie une indication graphique d'une deuxième mise à jour de données de complication de la deuxième pluralité de mises à jour de données de complication pour un affichage sur le dispositif d'affichage (12) ;
le remplacement, par la montre informatisée (10) au quatrième temps et sur le dispositif d'affichage (12), de l'indication graphique de données de la première mise à jour de données de complication de la deuxième pluralité de mises à jour données de complication par l'indication graphique de données de la deuxième mise à jour de données de complication de la deuxième pluralité de mises à jour de données de complication ;
la détermination, par la montre informatisée (10) et sur la base du troisième temps et des troisièmes données de synchronisation, d'un cinquième temps auquel fournir en sortie une indication graphique de données d'une deuxième mise à jour de données de complication de la troisième pluralité de mises à jour de données de complication pour un affichage sur le dispositif d'affichage (12) ; et
le remplacement, par la montre informatisée (10) au cinquième temps et au niveau du dispositif d'affichage (12), de l'indication graphique de données de la première mise à jour de données de complication de la troisième pluralité de mises à jour de données de complication par l'indication graphique de données de la deuxième mise à jour de données de complication de la troisième pluralité de mises à jour de données de complication.

3. Procédé selon la revendication 2, comprenant en outre :
la détermination, par la montre informatisée (10), d'un sixième temps comprenant la fréquence de mise à jour effective ajoutée au troisième temps ;
la demande, par la montre informatisée (10) au sixième temps et auprès du deuxième fournisseur de données associé à la deuxième complication, d'un quatrième ensemble de données de complication associé à la deuxième complication ; et
la demande, par la montre informatisée (10) au sixième temps et auprès du premier fournisseur de données associé à la première complication, d'un cinquième ensemble de données de complication associé à la première complication.

4. Procédé selon l'une quelconque des revendications 1 à 3, dans lequel la complication (16) comprend une première complication, et dans lequel le procédé comprend en outre :
la demande, par la montre informatisée (10) et auprès d'un dispositif serveur, d'une liste d'une ou de plusieurs complications, dans lequel chacune des une ou plusieurs complications est associée à un fournisseur de données respectif ;
l'envoi, par la montre informatisée (10) et au dispositif serveur, d'une sélection de la première complication issue de la liste d'une ou de plusieurs complications ; et
la réception, par la montre informatisée (10) et depuis le dispositif serveur, de premières données d'exigence associées à la première complication, dans lequel les premières données d'exigence comportent une première fréquence de mise à jour minimale.

5. Procédé selon la revendication 4, comprenant en outre :
l'envoi, par la montre informatisée (10) et au dispositif serveur, d'une deuxième sélection d'une deuxième complication issue de la liste d'une ou de plusieurs complications ; et
la réception, par la montre informatisée (10) et depuis le dispositif serveur, de deuxièmes données d'exigence associées à la deuxième complication, dans lequel les deuxièmes données d'exigence comportent une deuxième fréquence de mise à jour minimale.

6. Procédé selon l'une quelconque des revendications 4 et 5, dans lequel les premières données d'exigence comportent en outre des caractéristiques de dispositif comprenant des informations demandées par le fournisseur de données (34) qui décrivent la montre informatisée (10), dans lequel les caractéristiques de dispositif comprennent en outre un ou plusieurs parmi des données d'emplacement, un modèle de la montre informatisée et des données de préférence, et dans lequel le procédé comprend en outre :
l'envoi, par la montre informatisée (10) et au fournisseur de données (34), des caractéristiques du dispositif.

7. Procédé selon l'une quelconque des revendications 1 à 6, dans lequel une différence entre le deuxième temps et le premier temps comprend la durée respective pendant laquelle l'indication graphique de données de la première mise à jour de données de complication doit être incluse par la complication (16) affichée sur le dispositif d'affichage (12) telle que définie par les données de synchronisation.

8. Procédé selon l'une quelconque des revendications 1 à 7, comprenant en outre :
la réception, par la montre informatisée (10), d'une indication d'entrée d'utilisateur sélectionnant la première mise à jour de données de complication ; et
en réponse à la réception de l'indication d'entrée d'utilisateur, la fourniture en sortie, par la montre informatisée (10) et pour un affichage sur le dispositif d'affichage (12), d'informations supplémentaires associées à la première mise à jour de données de complication.

9. Procédé selon l'une quelconque des revendications 1 à 8, dans lequel le remplacement de l'indication graphique de données de la première mise à jour de données de complication par l'indication graphique de données de la deuxième mise à jour de données de complication comprend :
le retrait, par la montre informatisée (10), de l'indication graphique de données de la première mise à jour de données de complication de l'affichage sur le dispositif d'affichage (12) ; et
la fourniture en sortie, par la montre informatisée (10) et pour un affichage sur le dispositif d'affichage (12), de l'indication graphique de données de la deuxième mise à jour de données de complication.

10. Montre informatisée (10) comprenant :
au moins un processeur (40) ;
une unité de communication (44) ; et
au moins un support de stockage non transitoire lisible par ordinateur stockant des instructions qui sont exécutables par l'au moins un processeur (40) pour :
activer l'unité de communication (44) ;
demander (320), via l'unité de communication (44) activée et auprès d'un premier fournisseur de données (34) associé à une première complication, d'un premier ensemble de données de complication associé à la première complication, dans laquelle la première complication (16) comprend un élément de notification graphique sur un dispositif d'affichage (12) de la montre informatisée (10) ;
recevoir (330), depuis le premier fournisseur de données (34) via l'unité de communication (44) activée, de l'ensemble de données de complication, dans laquelle l'ensemble de données de complication comprend une pluralité de mises à jour de données de complication associées à la première complication (16) et des données de synchronisation, dans laquelle les données de synchronisation définissent une durée respective pendant laquelle une indication graphique de données de chaque mise à jour de données de complication de la pluralité de mises à jour de données de complication doit être incluse par la première complication (16) affichée sur le dispositif d'affichage (12), et dans laquelle la pluralité de mises à jour de données de complication comporte au moins une première mise à jour de données de complication et une deuxième mise à jour de données de complication ;
après la réception de l'ensemble de données de complication, désactiver l'unité de communication (44) ;
en réponse à la réception de l'ensemble de données de complication, fournir en sortie (340), à un premier temps pour un affichage au niveau du dispositif d'affichage (12), une interface utilisateur graphique (14B, 84A à F) comportant des informations de temps actuel et une pluralité de complications (86A à C) comportant la complication (16, 86A) et une deuxième complication (86B) associée à un deuxième fournisseur de données différent du premier fournisseur de données, dans laquelle la première complication (16) comporte l'indication graphique de données de la première mise à jour de données de complication, dans laquelle la première complication (86A) a une première fréquence de mise à jour minimale, dans laquelle la deuxième complication (86B) a une deuxième fréquence de mise à jour minimale, et dans laquelle la première fréquence de mise à jour minimale est supérieure à la deuxième fréquence de mise à jour minimale ;
déterminer (350), sur la base du premier temps et de la durée respective, définis par les données de synchronisation selon lesquelles l'indication graphique de données de la première mise à jour de données de complication doit être incluse par la première complication (16) affichée sur le dispositif d'affichage (12), un deuxième temps auquel fournir en sortie l'indication graphique de données de la deuxième mise à jour de données de complication pour un affichage sur le dispositif d'affichage (12) ;
remplacer (360), au deuxième temps et sur le dispositif d'affichage (12), l'indication graphique de données de la première mise à jour de données de complication par l'indication graphique de données de la deuxième mise à jour de données de complication ; et
déterminer, par la montre informatisée (10), une fréquence de mise à jour effective pour la deuxième complication (86B), dans laquelle la détermination de la fréquence de mise à jour effective comprend :
la détermination, par la montre informatisée (10), du fait que la première fréquence de mise à jour minimale est ou non un multiple de la deuxième fréquence de mise à jour minimale ;
en réponse à la détermination du fait que la première fréquence de mise à jour minimale est un multiple de la deuxième fréquence de mise à jour minimale, la détermination, par la montre informatisée (10), de la fréquence de mise à jour effective comme étant la deuxième fréquence de mise à jour minimale ; et
en réponse à la détermination du fait que la première fréquence de mise à jour minimale n'est pas un multiple de la deuxième fréquence de mise à jour minimale, la détermination, par la montre informatisée (10), d'une période de temps correspondant à la fréquence de mise à jour effective comme étant un multiple d'une période de temps correspondant à la première fréquence de mise à jour minimale,
dans lequel des mises à jour de données de complication ultérieures pour la deuxième complication sont demandées conformément à la fréquence de mise à jour effective déterminée.

11. Montre informatisée (10) selon la revendication 10, dans laquelle les instructions sont en outre exécutables par l'au moins un processeur (40) pour réaliser l'un quelconque des procédés des revendications 1 à 9.

12. Support non transitoire lisible par ordinateur stockant des instructions qui, lorsqu'elles sont exécutées, amènent au moins un processeur (40) d'une montre informatisée (10) à réaliser l'un quelconque des procédés des revendications 1 à 9.
